(19) **Europäisches Patentamt / European Patent Office / Office européen des brevets**

(11) **EP 3 648 517 A1**

(12) **EUROPEAN PATENT APPLICATION**
published in accordance with Art. 153(4) EPC

(43) Date of publication:
06.05.2020 Bulletin 2020/19

(51) Int Cl.:
H04W 56/00 (2009.01)    G01S 19/16 (2010.01)
G04G 3/02 (2006.01)    G04G 7/00 (2006.01)
G04G 21/00 (2010.01)    G04R 40/06 (2013.01)
H04L 7/00 (2006.01)    H04W 64/00 (2009.01)

(21) Application number: 18824787.8

(22) Date of filing: 15.06.2018

(86) International application number:
PCT/JP2018/022834

(87) International publication number:
WO 2019/003950 (03.01.2019 Gazette 2019/01)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 30.06.2017 JP 2017128825

(71) Applicant: Sony Semiconductor Solutions
Corporation
Atsugi-shi, Kanagawa 243-0014 (JP)

(72) Inventors:
• TANAKA, Katsuyuki
  Atsugi-shi
  Kanagawa 243-0014 (JP)
• YONEYAMA, Yusuke
  Atsugi-shi
  Kanagawa 243-0014 (JP)

(74) Representative: MFG Patentanwälte
Meyer-Wildhagen Meggle-Freund
Gerhard PartG mbB
Amalienstraße 62
80799 München (DE)

(54) **WIRELESS TERMINAL, INFORMATION PROCESSING DEVICE, INFORMATION PROCESSING METHOD, AND PROGRAM**

(57)    The present technology relates to a mobile terminal, an information processor, an information processing method, and a program capable of synchronizing time with high precision even in a case where the number of satellites that can be captured is small.

In a case where the number of satellites that can be captured is less than a predetermined number, a mobile terminal of one aspect of the present technology does not perform positioning, and generates and outputs, from a positioning unit, pulse signals at predetermined intervals synchronized with a time of the satellite that can be captured, on the basis of information from the satellite. The mobile terminal then maintains time synchronization of wireless communication with an external device of a wireless communication unit with reference to the pulse signal, and performs the wireless communication. The present technology can be applied to terminals equipped with a positioning function based on GNSS and a wireless communication function such as LPWA.

FIG. 16

EP 3 648 517 A1

**Description**

TECHNICAL FIELD

The present technology relates to a mobile terminal, an information processor, an information processing method, and a program, and in particular, to a mobile terminal, an information processor, an information processing method, and a program capable of synchronizing time with high precision even in a case where the number of satellites that can be captured is small.

BACKGROUND ART

Attention has been focused on watching services for children, the elderly, and the like. Since position information of the monitoring target is indispensable for a watching service, the person to be monitored carries a mobile terminal equipped with a global navigation satellite system (GNSS) receiver.

A GNSS receiver is capable not only of positioning, but also synchronizing the time inside the receiver with GNSS time managed with high precision by an atomic clock. Additionally, a GNSS receiver can detect an oscillation frequency error of an internal oscillator.

A general GNSS receiver has a function of using such internal time and oscillation frequency error to output a 1 pulse per second (1PPS) signal that is a 1 Hz pulse signal synchronized with GNSS time with a precision of several tens of nanoseconds. The 1PPS signal is used for time synchronization of wireless communication for implementing a watching service, for example.

Incidentally, in a case where the number of satellites that can be captured is reduced to less than four, not only the position but usually an accurate 1PPS signal cannot be obtained. In such a case, position interpolation and output of 1PPS signals may be continued by obtaining correction information and timing information from a base station and other terminals (Patent Document 1, for example).

CITATION LIST

PATENT DOCUMENT

Patent Document 1: Japanese Patent Application Laid-Open No. 2015-23337

SUMMARY OF THE INVENTION

PROBLEMS TO BE SOLVED BY THE INVENTION

Wireless communication for implementing a watching service is not necessarily bi-directional communication, and in such a case, it is not possible to perform position interpolation and the like using information from an external device as described above. It is preferable that 1PPS signals be output continuously and time synchronization of wireless communication be maintained even in an environment where satellite reception is not good.

The present technology has been made in view of such a situation, and makes it possible to synchronize the time with high precision even in a case where the number of satellites that can be captured is small.

SOLUTIONS TO PROBLEMS

A mobile terminal of one aspect of the present technology includes a positioning unit that, in a case where a number of satellites that can be captured is less than a predetermined number, does not perform positioning, and generates and outputs pulse signals at predetermined intervals synchronized with a time of the satellite that can be captured, on the basis of information from the satellite, and a wireless communication unit that maintains time synchronization of wireless communication with an external device with reference to the pulse signal, and performs the wireless communication.

The positioning unit can be controlled to generate the pulse signal by performing calculation assuming that a most recently measured position is a position of the mobile terminal and a moving velocity is zero.

The positioning unit can be controlled to calculate an internal time of the mobile terminal on the basis of a position of the satellite that can be captured and a time of the satellite, and calculate a frequency error of an internal oscillator of the mobile terminal on the basis of a velocity of the satellite that can be captured and a Doppler frequency of the satellite, to generate the pulse signal on the basis of the internal time and the frequency error.

The predetermined number can be four.

The pulse signal can be a 1PPS signal.

The wireless communication unit can be controlled to transmit data according to a timing set with reference to the pulse signal.

The wireless communication unit can be controlled to set a reception window at a timing corresponding to a timing at which the external device transmits data with reference to the pulse signal, and receive data transmitted by the external device during a period of the reception window.

The wireless communication unit can be controlled to set the reception window with a time width equal to or greater than a sum of: an assumed maximum propagation delay time in a communication area of the external device, a time according to a packet length of a packet used for transmission of the data, and a time corresponding to an assumed error of an internal time of the mobile terminal.

The wireless communication unit can be controlled to set the reception window with a time width equal to or greater than a time obtained by further adding a time corresponding to a reception synchronization error.

The positioning unit can be controlled to calculate a pseudo range and a Doppler frequency on the basis of information from the satellite that can be captured, and the wireless communication unit can be controlled to transmit information of the pseudo range and the Doppler frequency.

A sensor including an acceleration sensor can be further provided. In this case, the wireless communication unit can be controlled to transmit sensor data detected by the sensor.

A control unit that corrects an error of a transmission frequency with respect to a specified frequency in the wireless communication on the basis of the frequency error can be further provided.

An information processor of another aspect of the present technology includes: a communication unit that receives information transmitted from a mobile terminal that, in a case where a number of satellites that can be captured is less than a predetermined number, does not perform positioning, generates and outputs, from a positioning unit, pulse signals at predetermined intervals synchronized with a time of the satellite that can be captured, on the basis of information from the satellite, and maintains time synchronization of wireless communication with an external device of a wireless communication unit with reference to the pulse signal; and an estimation unit that estimates a state of the mobile terminal on the basis of information received by the communication unit.

The estimation unit can be controlled to estimate whether or not the mobile terminal is moving on the basis of a pseudo range and a Doppler frequency obtained by the mobile terminal on the basis of information from the satellite that can be captured, or on the basis of sensor data detected by the mobile terminal.

The estimation unit can be controlled to estimate a position of the mobile terminal on the basis of transmission delay in a case where information transmitted by the mobile terminal is received by a plurality of the external devices.

In one aspect of the present technology, in a case where the number of satellites that can be captured is less than a predetermined number, the positioning is not performed and pulse signals are generated, in a positioning unit, at predetermined intervals synchronized with a time of the satellite that can be captured, on the basis of information from the satellite. Additionally, time synchronization of wireless communication with an external device of a wireless communication unit is maintained with reference to the pulse signal, and the wireless communication is performed.

In another aspect of the present technology, information transmitted from a mobile terminal is received, the mobile terminal being configured to, in a case where a number of satellites that can be captured is less than a predetermined number, not perform positioning, generate and output, from a positioning unit, pulse signals at predetermined intervals synchronized with a time of the satellite that can be captured, on the basis of information from the satellite, and maintain time synchronization of wireless communication with an external device of a wireless communication unit with reference to the pulse signal, and a state of the mobile terminal is estimated on the basis of received information.

EFFECTS OF THE INVENTION

According to the present technology, even in a case where the number of satellites that can be captured is small, the time can be synchronized with high precision.

Note that the effect described herein is not necessarily limited, and may be any effect described in the present disclosure.

BRIEF DESCRIPTION OF DRAWINGS

Fig. 1 is a diagram showing an example of GNSS.
Fig. 2 is a diagram showing an example of propagation time.
Fig. 3 is a diagram showing an example of propagation time including an error.
Fig. 4 is a diagram showing the relationship between relative velocity and the Doppler frequency.

Fig. 5 is a diagram showing a 1PPS signal.

Fig. 6 is a diagram showing a configuration example of a wireless communication system.

Fig. 7 is a diagram showing an example of communication in a wireless communication system.

Fig. 8 is a block diagram showing a configuration example of a mobile terminal.

Fig. 9 is a diagram showing a configuration example of a wireless transceiver.

Fig. 10 is a diagram showing a configuration example of a GNSS receiver.

Fig. 11 is a flowchart illustrating reception processing of the GNSS receiver.

Fig. 12 is a flowchart illustrating processing of the mobile terminal.

Fig. 13 is a diagram showing an example of propagation delay in a communication area.

Fig. 14 is a diagram showing an example of communication in a wireless communication system.

Fig. 15 is a diagram illustrating examples of setting a reception window.

Fig. 16 is a diagram showing an example of data transmission/reception in a wireless communication system.

Fig. 17 is a block diagram showing a configuration example of a base station.

Fig. 18 is a flowchart illustrating reception processing of a GNSS receiver.

Fig. 19 is a flowchart illustrating processing of the base station performed corresponding to the processing of Fig. 18.

Fig. 20 is a diagram showing a configuration example of a wireless communication system.

Fig. 21 is a block diagram showing a configuration example of a server device.

Fig. 22 is a flowchart illustrating processing of the server device.

Fig. 23 is a diagram showing another example of data transmission/reception in a wireless communication system.

Fig. 24 is a flowchart illustrating transmission frequency error correction processing.

## MODES FOR CARRYING OUT THE INVENTION

Hereinafter, modes for carrying out the present technology will be described. Note that the description will be given in the following order.

1. Positioning principle of GNSS
2. First embodiment (example of maintaining time synchronization of wireless communication)
3. Second embodiment (reception window setting example)
4. Third embodiment (example of transmission data)
5. Fourth embodiment (another example of transmission data)
6. Fifth Embodiment (example of correcting error in transmission frequency of wireless communication)

<<1. Positioning principle of GNSS>>

The positioning principle of GNSS will be explained. A GNSS receiver, which is a receiver that supports GNSS, can perform positioning by receiving multiple radio waves from satellites such as GPS (USA), GLONASS (Russia), BeiDou (China), Galileo (EU), and quasi-zenith satellite Michibiki (Japan).

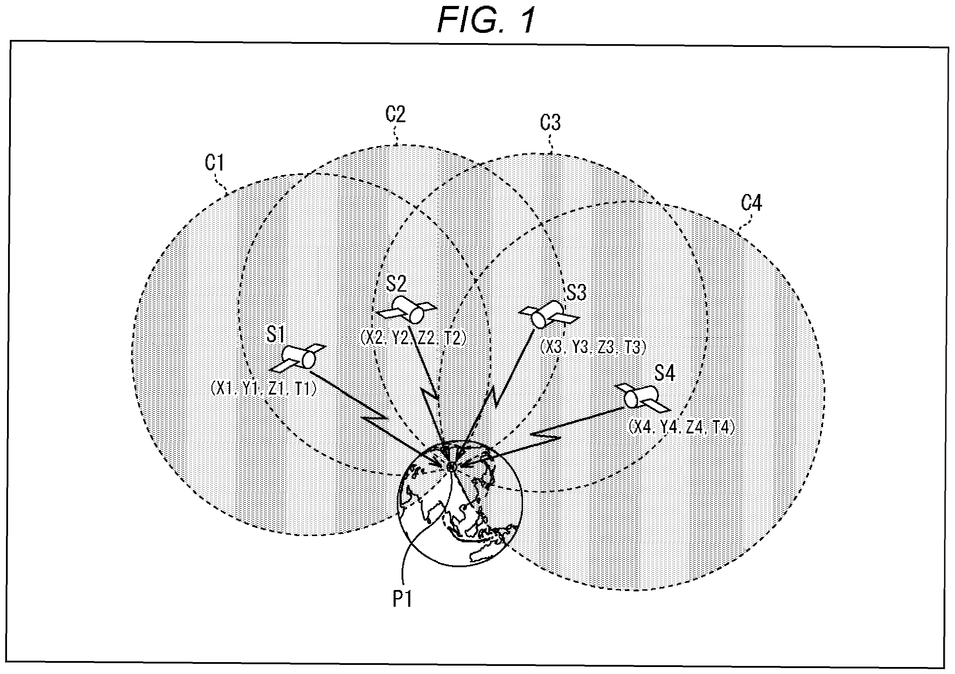

Fig. 1 is a diagram showing an example of GNSS.

In the example of Fig. 1, satellites S1 to S4 are shown. Radio waves from the satellites S1 to S4 are received by a GNSS receiver located in a position P1 on the earth.

The satellites S1 to S4 transmit messages (navigation messages) in synchronization. The messages transmitted by the satellites S1 to S4 include information such as orbital calculation formulas and radio wave transmission times.

The GNSS receiver in the position P1 receives messages from the satellites S1 to S4, performs calculations on the basis of information included in the messages, and obtains the positions of the satellites S1 to S4.

In the example of Fig. 1, the position of the satellite S1 is represented by position (X1, Y1, Z1). Similarly, the positions of the satellites S2 to S4 are represented as position (X2, Y2, Z2), position (X3, Y3, Z3), and position (X4, Y4, Z4), respectively. Times of the satellites S1 to S4 are times T1 to T4, respectively.

The GNSS receiver obtains the distance between a satellite and the GNSS receiver on the basis of a radio wave propagation time represented as the difference between time T managed by the GNSS receiver and the time of each satellite.

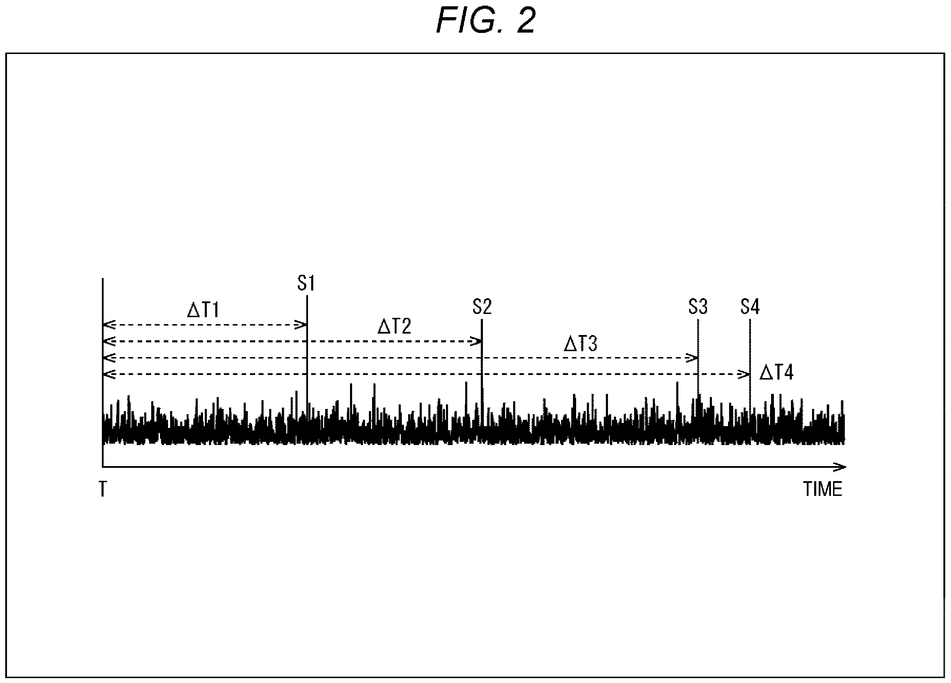

Fig. 2 is a diagram showing an example of propagation time.

The horizontal axis in Fig. 2 represents time. In the example of Fig. 2, the propagation time of radio waves from the satellite S1 is expressed as $\Delta T1$. Similarly, the propagation times of radio waves from the satellites S2 to S4 are expressed as $\Delta T2$ to $\Delta T4$, respectively.

In a case where a sphere whose radius is the distance between a satellite and the GNSS receiver is set around the position of each of the satellites, the position of the GNSS receiver is obtained as the position of the intersection of the spheres. When the position of the GNSS receiver is position (X, Y, Z), the following equation (1) is established.

[Expression 1]

$$(Xi-X)^2+(Yi-Y)^2+(Zi-Z)^2=(C\cdot\Delta Ti)^2 \quad \cdots (1)$$

In equation (1), Xi, Yi, and Zi are positions of a satellite, and Ti is the propagation time. In the example of Fig. 1, i takes a value of 1 to 4. C is the speed of light.

In the example of Fig. 1, the position of the intersection of the spheres C1 to C4 centered on the satellites S1 to S4, respectively, is obtained as the position P1 of the GNSS receiver.

<Receiver position calculation>

The calculation of the position of the GNSS receiver will be described further. The position of the GNSS receiver is obtained by solving simultaneous equations including the following equations (2) to (5) on the basis of synchronization information of the spreading code (C/A code).

[Expression 2]

$$\{(X1-Xu)^2+(Y1-Yu)^2+(Z1-Zu)^2\}^{1/2}=C\cdot(Tu-T1) \quad \cdots (2)$$

[Expression 3]

$$\{(X2-Xu)^2+(Y2-Yu)^2+(Z2-Zu)^2\}^{1/2}=C\cdot(Tu-T2) \quad \cdots (3)$$

[Expression 4]

$$\{(X3-Xu)^2+(Y3-Yu)^2+(Z3-Zu)^2\}^{1/2}=C\cdot(Tu-T3) \quad \cdots (4)$$

[Expression 5]

$$\{(X4-Xu)^2+(Y4-Yu)^2+(Z4-Zu)^2\}^{1/2}=C\cdot(Tu-T4) \quad \cdots (5)$$

In equations (2) to (5), Xu, Yu, and Zu are positions of the GNSS receiver, and Tu is the time of the GNSS receiver.

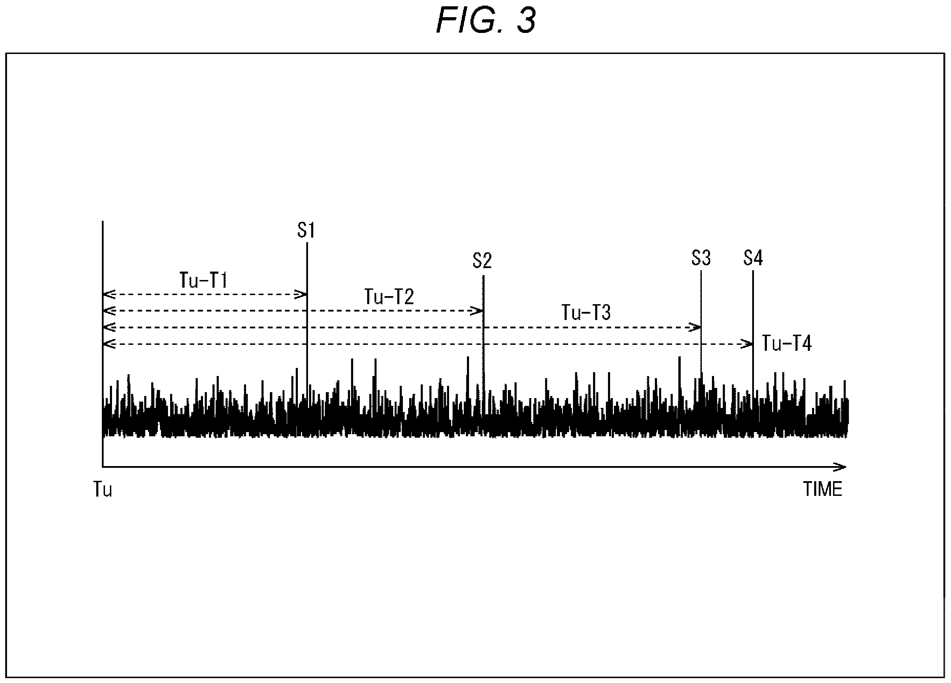

Since Xi, Yi, Zi, and Ti are known by C/A code synchronization between orbit information and the GNSS receiver, there are four unknowns: Xu, Yu, Zu, and Tu. Since the clock (oscillator) inside the GNSS receiver includes errors, Tu is also an unknown. In practice, the propagation time of radio waves from each satellite is expressed in a form including an error as shown in Fig. 3. Since the distance includes a clock error, the right side of equations (2) to (5) is referred to as a pseudo range.

In order for the GNSS receiver to calculate its position, it is necessary to capture (receive radio waves from) four or more satellites. Also, by calculating the position, the error of the clock inside the GNSS receiver can also be known as additional information.

The simultaneous equations as described above are generally calculated by sequential calculation using the Newton Raphson method. If the number of satellites that can be captured is five or more, the calculation is performed by the least square method.

<Receiver velocity calculation>

The calculation of the velocity of the GNSS receiver will be described.

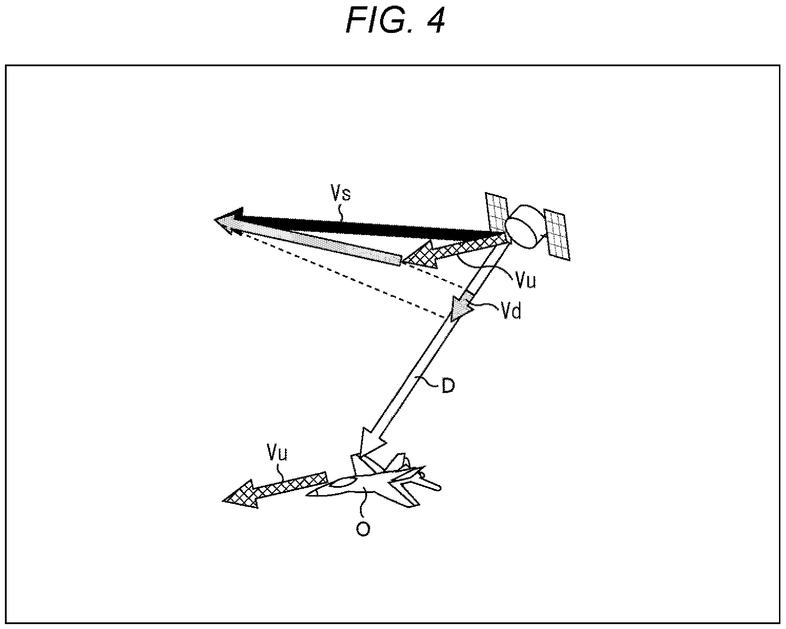

Fig. 4 is a diagram showing the relationship between relative velocity and the Doppler frequency.

In a case where the movement of a satellite is represented by vector Vs and the movement of a mobile unit O is represented by vector Vu, vector Vd representing the difference is expressed by the following equation (6). e in equation (6) is represented by the following equation (7). D is a vector from the satellite to the mobile unit O.

[Expression 6]

$$Vd = ((Vs - Vu) \cdot e) \qquad \cdots (6)$$

[Expression 7]

$$e = D/|D| \qquad \cdots (7)$$

Relative velocity is expressed as the magnitude of vector Vd. When c/fc is wavelength $\lambda$, the following equation (8) is established. fd is a Doppler frequency.
[Expression 8]

$$Vd = C \cdot fd/fc = fd \cdot \lambda \qquad \cdots (8)$$

Here, the velocity of the GNSS receiver is obtained by solving simultaneous equations including the following equations (9) to (12) on the basis of carrier synchronization information.
[Expression 9]

$$(VX1 - VXu) \cdot eX1 + (VY1 - VYu) \cdot eY1 + (VZ1 - VZu) \cdot eZ1$$
$$= C \cdot (fd1 - dfu)/fc \qquad \cdots (9)$$

[Expression 10]

$$(VX2 - VXu) \cdot eX2 + (VY2 - VYu) \cdot eY2 + (VZ2 - VZu) \cdot eZ2$$
$$= C \cdot (fd2 - dfu)/fc \qquad \cdots (10)$$

[Expression 11]

$$(VX3 - VXu) \cdot eX3 + (VY3 - VYu) \cdot eY3 + (VZ3 - VZu) \cdot eZ3$$
$$= C \cdot (fd3 - dfu)/fc \qquad \cdots (11)$$

[Expression 12]

$$(VX4 - VXu) \cdot eX4 + (VY4 - VYu) \cdot eY4 + (VZ4 - VZu) \cdot eZ4$$
$$= C \cdot (fd4 - dfu)/fc \qquad \cdots (12)$$

In equations (9) to (12), VXi, VYi, and VZi are satellite velocities. fdi and fc are a Doppler frequency and a carrier frequency, respectively. eXi, eYi, and eZi are unit vectors from the satellite to the GNSS receiver.
Additionally, VXu, VYu, and VZu are velocities of the GNSS receiver, and dfu is a frequency error of the oscillator of the GNSS receiver.
Since VXi, VYi, and VZi are known by carrier synchronization between orbit information and the GNSS receiver, there are four unknowns: VXu, VYu, VZu, and dfu. Since the oscillator frequency of the GNSS receiver includes an error, dfu is also an unknown.
In order for a GNSS receiver to calculate its velocity, it is necessary to capture four or more satellites. Also, by calculating the velocity, the exact frequency of the oscillator of the GNSS receiver can also be known as additional information.

<1PPS signal>

In the GNSS receiver, a 1PPS signal can be generated on the basis of the terminal time Tu, which is the internal time of the GNSS receiver, and the oscillator frequency error dfu, which is the frequency error of the oscillator of the GNSS receiver.

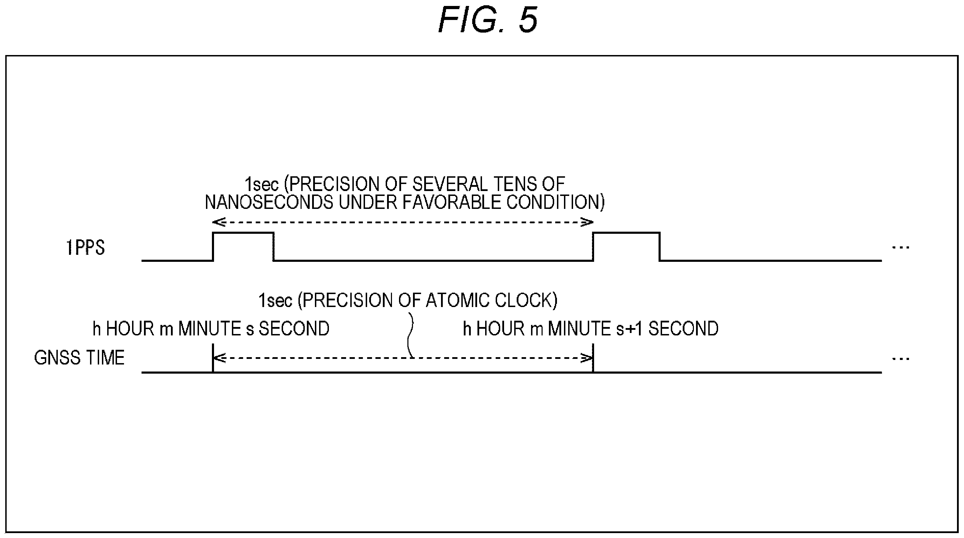

Fig. 5 is a diagram showing a 1PPS signal.

As shown in Fig. 5, the 1PPS signal generated by the GNSS receiver is a precise one-second pulse signal synchronized with the satellite time (GNSS time).

In a case where a mobile terminal equipped with a GNSS receiver is a terminal compatible with a wireless communication system such as low power wide area (LPWA), and transmits position information and the like by wireless communication, it is possible to synchronize time with the reception side by setting the timing with reference to the 1PPS signal.

In the following, a description will mainly be given of processing in a case where the number of satellites that can be captured is less than four in a mobile terminal having a positioning function using GNSS and a wireless communication function using a wireless communication system such as LPWA.

In a case where radio waves from satellites are blocked by buildings, trees, human bodies, and the like, and the number of satellites that can be captured is less than four, a mobile terminal cannot perform positioning. Additionally, the mobile terminal cannot generate a 1PPS signal by the above-described normal method based only on information from the satellite, and thus cannot maintain time synchronization for wireless communication.

<<2. First embodiment>>

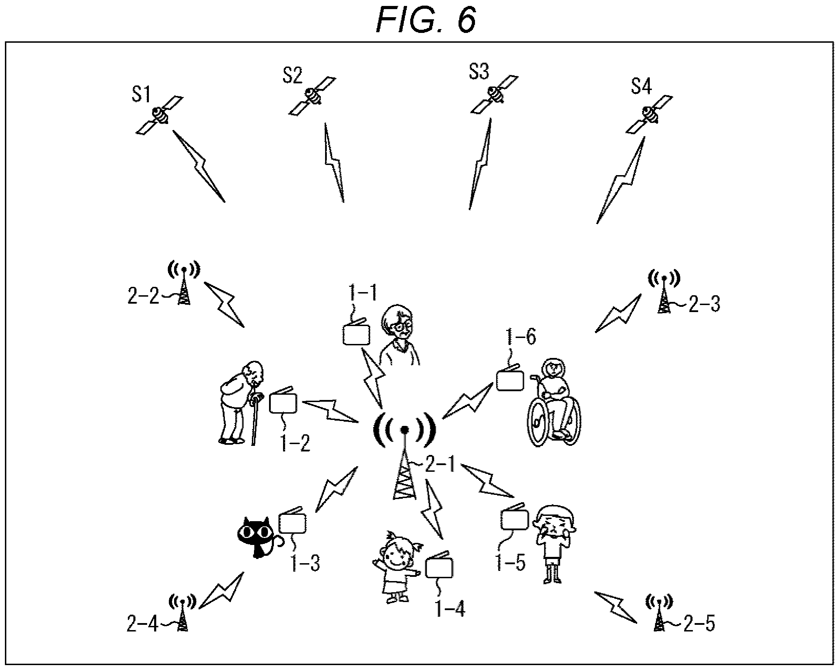

Fig. 6 is a diagram showing a configuration example of a wireless communication system.

The wireless communication system of Fig. 6 includes mobile terminals 1-1 to 1-6 and base stations 2-1 to 2-5. Hereinafter, in a case where distinction is not necessary, the mobile terminals 1-1 to 1-6 are referred to as a mobile terminal 1, and the base stations 2-1 to 2-5 are referred to as a base station 2.

The wireless communication system of Fig. 6 is an LPWA wireless communication system using a predetermined frequency band such as 920 MHz. Radio waves from the mobile terminal 1 reach a place several kilometers to several tens of kilometers away, and are received by the base station 2 that includes the current position of the mobile terminal 1 in its communication area. In the example of Fig. 6, it is assumed that there are users carrying the mobile terminals 1-1 to 1-6 in the communication area of the base station 2-1.

The mobile terminal 1 performs positioning by receiving radio waves from a satellite, and transmits position information together with its own identification information and other information. Information transmitted from the mobile terminal 1 is received by the base station 2, and is transmitted to a server device (not shown) through a network such as the Internet.

The server device that receives the information transmitted from the mobile terminal 1 manages the position information of the mobile terminal 1, and provides the information in response to an inquiry from a user who accesses from a client device such as a smartphone.

Such a wireless communication system is used for watching, for example. The mobile terminal 1 is carried or worn by a monitoring target such as an elderly person, a child, or a pet. In a case where the number of satellites that can be captured is less than four, the mobile terminal 1 cannot perform positioning, which affects the monitoring of the monitoring target.

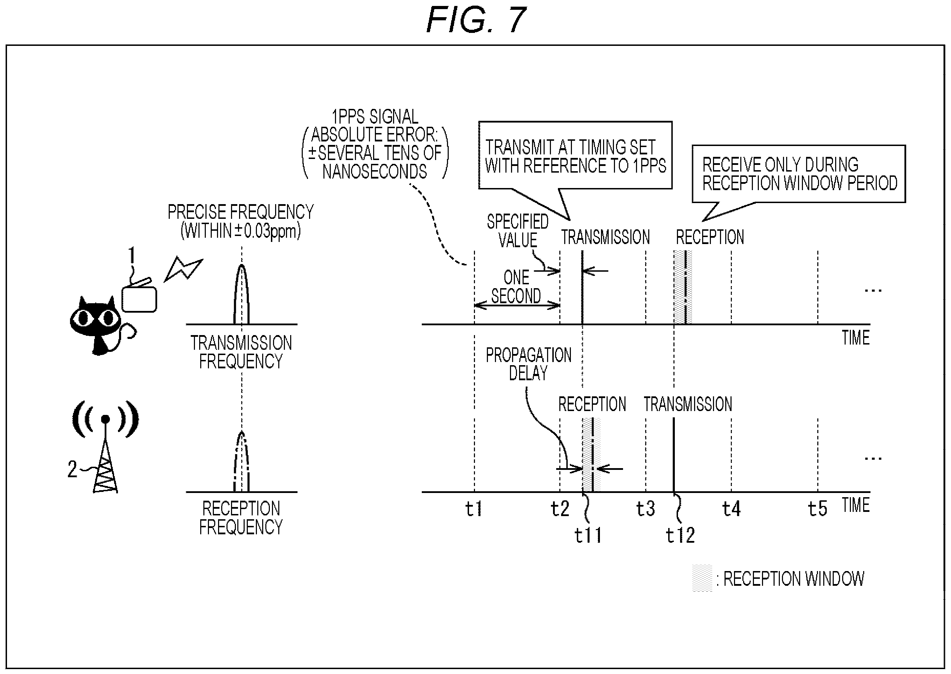

Fig. 7 is a diagram showing an example of communication in a wireless communication system.

As shown on the left side of Fig. 7, data transmission by the transmission side and data reception by the reception side are performed by setting carriers having the same frequency as the center frequency.

The upper part on the right side of Fig. 7 shows a data transmission timing and a data reception timing by the mobile terminal 1. The lower part shows a data reception timing and a data transmission timing by the base station 2.

Times t1 to t5 indicated by dotted lines on the upper and lower time axes are times defined by 1PPS signals generated by the GNSS receivers of the mobile terminal 1 and the base station 2, respectively. Times t1 to t5 are each separated by an interval of 1 second. It is possible to set such synchronized timings on the basis of the 1PPS signal. A state where the data transmission/reception timing is set on the basis of the 1PPS signal in both the mobile terminal 1 and the base station 2 is a state where time synchronization between the mobile terminal 1 and the base station 2 is established.

On the transmission side, the data transmission timing is set with reference to the 1PPS signal. On the other hand, on the reception side, a reception window having a predetermined time width is set in accordance with the transmission timing, as indicated by a light colored band, and data is received only during the reception window period.

In the example of Fig. 7, time t11 that is a time after passage of a time corresponding to a specified value from time t2 is set as a data transmission timing by the mobile terminal 1. In the base station 2 on the reception side, the reception window is set so that time t11 is the start time, and data transmitted from the mobile terminal 1 is received.

Data transmitted from the mobile terminal 1 at the timing of time t11 is received by the base station 2 at a timing after passage of a predetermined time from time t11, as indicated by an alternate long and short dash line. The difference between the transmission timing and the reception timing corresponds to a transmission delay.

Additionally, in the example of Fig. 7, time t12 that is a time after passage of a time corresponding to the specified value from time t3 is set as a data transmission timing by the base station 2. In the mobile terminal 1 on the reception side, the reception window is set so that time t12 is the start time, and data transmitted from the base station 2 is received.

Data transmitted from the base station 2 at the timing of the time t12 is received by the mobile terminal 1 at a timing after passage of a predetermined time from time t12, as indicated by an alternate long and short dash line.

As described above, communication in the wireless communication system of Fig. 6 is performed by each of the transmission side and the reception side setting the transmission timing and the reception timing in synchronization with reference to the 1PPS signal. The communication between the mobile terminal 1 and the base station 2 may be bidirectional communication as shown in Fig. 7, or may be unidirectional communication from the mobile terminal 1 to the base station 2.

In a case where the number of terminals that transmit position information increases and each terminal transmits data without control, data collision becomes more frequent, and the number of terminals accommodated becomes an issue. Collision can be made less frequent by exchanging data after establishing time synchronization between each terminal and the base station by using GNSS. On the other hand, in a case where a 1PPS signal cannot be obtained, communication cannot be performed.

Here, in a case where the number of satellites that can be captured is less than four (one or more and less than four), the mobile terminal 1 has a function of generating an 1PPS signal by approximately obtaining the terminal time Tu and the oscillator frequency error dfu assuming that the moving velocity is low and the moving distance is short.

In a case where the number of satellites that can be captured is less than four, positioning cannot be performed, but time synchronization of wireless communication with the base station 2 is maintained.

That is, in a case where the number of satellites that can be captured is four or more, the mobile terminal 1 performs positioning, and also calculates the position and velocity as described above to generate a 1PPS signal. Assuming that the internal clock of the GNSS receiver is 20 MHz, the time resolution is 50 ns, so the precision of the 1PPS signal can be increased to $\pm$ 25 ns.

On the other hand, in a case where the number of satellites that can be captured is less than four, the mobile terminal 1 approximately obtains the terminal time Tu and the oscillator frequency error dfu, by calculating the following equations (13) and (14) assuming that the moving velocity is zero and the current position is the most recently measured position.

[Expression 13]

$$Tu \doteqdot \Sigma[Tn + \{(Xn-Xu)^2 + (Yn-Yu)^2 + (Zn-Zu)^2\}^{1/2}/C]/N$$

$$\cdots (13)$$

[Expression 14]

$$dfu \doteqdot \Sigma[fdn - fc \cdot \{VXn \cdot eXn + VYn \cdot eYn + VZn \cdot eZn\}/C]/N$$

$$\cdots (14)$$

In equations (13) and (14), N is the number of satellites that can be captured (N $\leqq$ 3). n represents each satellite that can be captured and takes a value of 0 to N-1.

In the calculation of the terminal time Tu according to equation (13), the most recently measured position is used as Xu, Yu, Zu.

Equation (13) corresponds to approximately obtaining, as the terminal time Tu, the average of terminal times obtained on the basis of the information of the satellites assuming that the current position of the mobile terminal 1 is the most recently measured position thereof. Such an approximate calculation is possible because the mobile terminal 1 is carried by a child or the like that is assumed to have a small amount of movement.

Since it is an approximate value, the value includes an error in units of us (microseconds) from the actual value of the terminal time Tu. However, the accuracy is ensured to the extent that it is usable for time synchronization in the wireless communication system described above.

Additionally, equation (14) corresponds to approximately obtaining, as the oscillator frequency error dfu, the average of oscillator frequency errors obtained on the basis of the information of the satellites assuming that the velocity of the mobile terminal 1 is zero. Such an approximate calculation is possible because the mobile terminal 1 is carried by a child or the like that is assumed to move slowly.

In the GNSS receiver of the mobile terminal 1, output of the 1PPS signal is continued on the basis of the terminal time Tu and the oscillator frequency error dfu that are approximately obtained in this way.

Thus, even in a case where the number of satellites that can be captured is less than four, by generating the 1PPS signal, it is possible to maintain time synchronization of wireless communication even in a case where the number of satellites that can be captured decreases from four or more to less than four.

Processing of the above mobile terminal 1 will be described later with reference to a flowchart.

<Configuration example of mobile terminal>

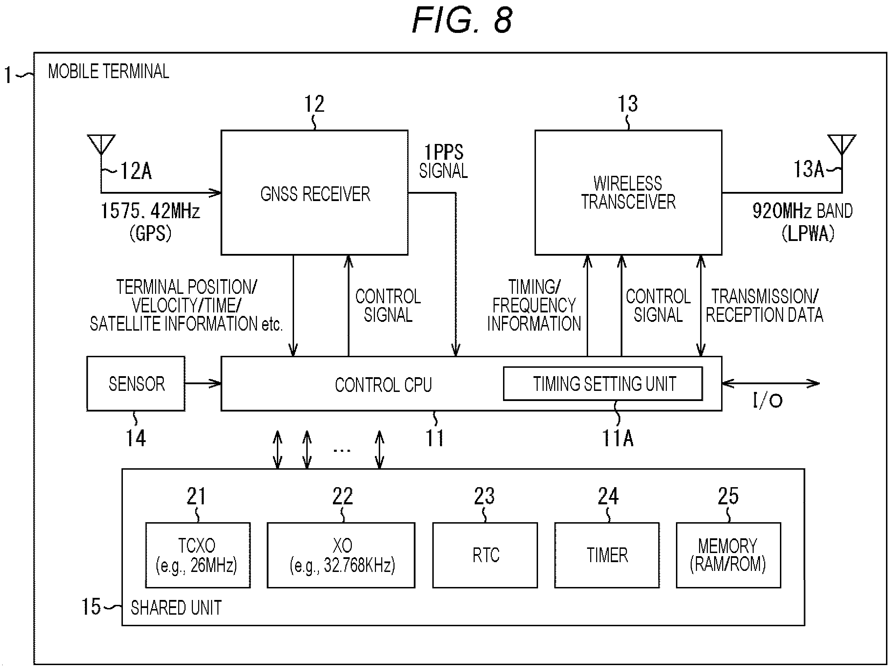

Fig. 8 is a block diagram showing a configuration example of the mobile terminal 1.

As shown in Fig. 8, the mobile terminal 1 includes a control CPU 11, a GNSS receiver 12, a wireless transceiver 13, a sensor 14, and a shared unit 15.

The control CPU 11 executes a program stored in a memory 25 of the shared unit 15 and controls the overall operation of the mobile terminal 1.

For example, the control CPU 11 controls the GNSS receiver 12 to perform positioning. Various types of information such as the position, velocity, and time of the mobile terminal 1, and information of satellites that can be captured is supplied from the GNSS receiver 12 to the control CPU 11. The control CPU 11 outputs the information such as the position, velocity, and time of the mobile terminal 1 to the wireless transceiver 13 for transmission.

In the control CPU 11, a timing setting unit 11A is implemented by executing a predetermined program. The timing setting unit 11A sets data transmission/reception timing with reference to the 1PPS signal supplied from the GNSS receiver 12, and outputs transmission/reception timing information to the wireless transceiver 13. Additionally, the timing setting unit 11A outputs information of the frequency of the carrier used for data transmission/reception to the wireless transceiver 13, and controls communication by the wireless transceiver 13.

The GNSS receiver 12, which is a GNSS receiver, calculates the position, velocity, time, and the like of the mobile terminal 1 by processing a signal from a satellite antenna 12A, and outputs the result to the control CPU 11. Additionally, the control CPU 11 generates a 1PPS signal and outputs it to the control CPU 11.

The wireless transceiver 13, which is an LPWA wireless communication device, transmits position information and other information supplied from the control CPU 11 in accordance with the transmission timing set by the control CPU 11. Additionally, the wireless transceiver 13 sets a reception window according to the reception timing set by the control CPU 11, and processes a signal supplied from an antenna 13A to receive data transmitted from an external device such as the base station 2.

The sensor 14 includes an acceleration sensor, a gyro sensor, and the like. The sensor 14 outputs sensor data representing the measurement result to the control CPU 11. Sensor data representing the measurement result of the sensor 14 is also transmitted to the base station 2 as appropriate.

The shared unit 15 includes a temperature compensated crystal oscillator (TCXO) 21, a crystal oscillator (XO) 22, a real time clock (RTC) 23, a timer 24, and the memory 25. Each configuration of the shared unit 15 is appropriately used by the control CPU 11, the GNSS receiver 12, and the wireless transceiver 13.

The TCXO 21 generates and outputs a 26 MHz clock signal, for example. The clock signal output from the TCXO 21 is supplied to the GNSS receiver 12 and the wireless transceiver 13.

The XO 22 generates and outputs a 32.768 kHz clock signal, for example. The clock signal output from the XO 22 is supplied to the GNSS receiver 12.

The RTC 23 measures the terminal time. For example, the terminal time obtained by the GNSS receiver 12 is set in the RTC 23.

The timer 24 manages the timing when the control CPU 11 controls each unit.

The memory 25 includes a random access memory (RAM) and a read only memory (ROM). A program stored in the ROM is read by the control CPU 11 and executed using the RAM.

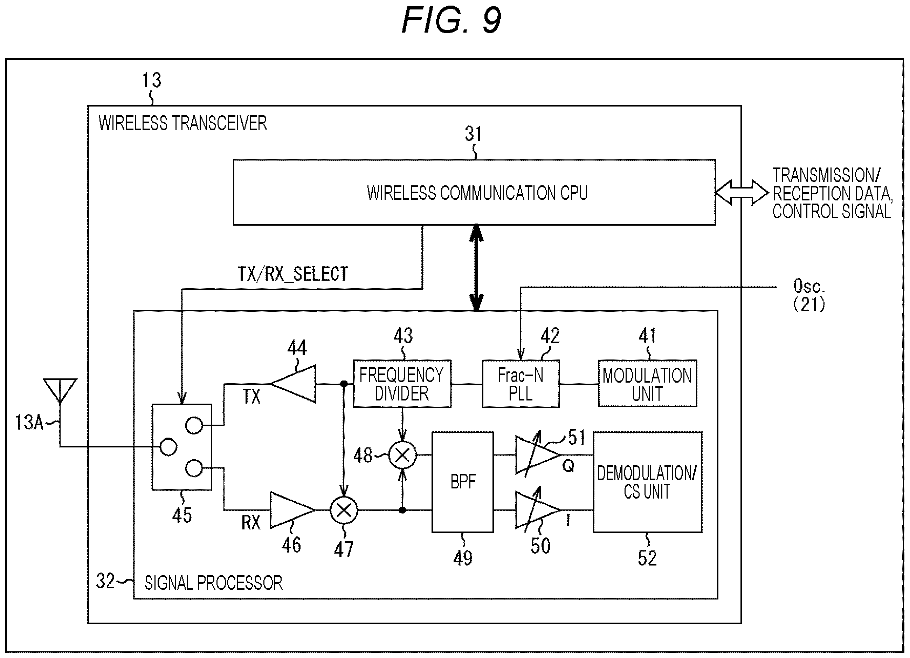

Fig. 9 is a diagram showing a configuration example of the wireless transceiver 13.

As shown in Fig. 9, the wireless transceiver 13 includes a wireless communication CPU 31 and a signal processor 32.

The wireless communication CPU 31 controls the operation of the signal processor 32 in accordance with a control signal supplied from the control CPU 11. For example, the wireless communication CPU 31 switches a switch 45 of the signal processor 32 to switch between a transmission operation and a reception operation.

Information such as the position, velocity, and time of the mobile terminal 1 is supplied as transmission data from the control CPU 11 to the wireless communication CPU 31. When transmitting data, the wireless communication CPU 31 outputs the transmission data supplied from the control CPU 11 to the signal processor 32 for transmission. Additionally, when receiving data, the wireless communication CPU 31 outputs data received by the signal processor 32 to the control CPU 11.

The signal processor 32 includes a modulation unit 41, a Fractional-N PLL 42, a frequency divider 43, an amplifier 44, the switch 45, an amplifier 46, a mixer 47, a mixer 48, a BPF 49, an amplifier 50, an amplifier 51, and a demodulation/CS unit 52.

When transmitting data, the modulation unit 41 acquires transmission data supplied from the wireless communication CPU 31, and outputs the transmission data to the Fractional-N PLL 42.

When transmitting data, the Fractional-N PLL 42 generates a transmission signal having a predetermined frequency on the basis of a clock signal supplied from the TCXO 21, and performs modulation processing on the data supplied from the modulation unit 41. In the Fractional-N PLL 42, modulation processing such as frequency shift keying (FSK) and minimum shift keying (MSK) is performed. Processing by a modulation scheme other than FSK and MSK may be performed in the Fractional-N PLL 42. The Fractional-N PLL 42 outputs a transmission signal obtained by performing the modulation processing to the frequency divider 43.

Additionally, when receiving data, the Fractional-N PLL 42 generates a signal having a predetermined frequency on the basis of a clock signal supplied from the TCXO 21, and outputs the signal to the frequency divider 43. In the Fractional-N PLL 42, the transmission/reception frequency is switched in 0.1 Hz steps, for example, according to control by the wireless communication CPU 31.

When transmitting data, the frequency divider 43 divides the transmission signal supplied from the Fractional-N PLL 42, and outputs the result to the amplifier 44. Additionally, when receiving data, the frequency divider 43 divides the clock signal supplied from the Fractional-N PLL 42, and outputs the result to the mixer 47 and the mixer 48.

When transmitting data, the amplifier 44 amplifies the transmission signal supplied from the frequency divider 43. The transmission signal amplified by the amplifier 44 is supplied to the antenna 13A through the switch 45, and is transmitted as a radio signal.

When receiving data, the amplifier 46 amplifies a reception signal supplied from the antenna 13A, and outputs the amplified signal to the mixer 47.

The mixer 47 performs frequency conversion on the reception signal supplied from the amplifier 46 on the basis of a clock signal supplied from the frequency divider 43, and outputs a signal obtained by performing the frequency conversion. The signal output from the mixer 47 is supplied to the mixer 48 and the BPF 49.

The mixer 48 performs frequency conversion on the signal supplied from the mixer 47 on the basis of a clock signal supplied from the frequency divider 43, and outputs a signal obtained by performing the frequency conversion. The signal output from the mixer 48 is supplied to the BPF 49.

The BPF 49 performs a filtering process on the signal supplied from the mixer 47 and outputs a signal in a predetermined frequency band to the amplifier 50. Additionally, the BPF 49 performs a filtering process on the signal supplied from the mixer 48 and outputs a signal in a predetermined frequency band to the amplifier 51.

The amplifier 50 amplifies the signal from the mixer 47 supplied through the BPF 49, and outputs the amplified signal to the demodulation/CS unit 52 as an I signal.

The amplifier 51 amplifies the signal from the mixer 48 supplied through the BPF 49, and outputs the amplified signal to the demodulation/CS unit 52 as a Q signal.

The demodulation/CS unit 52 demodulates the I signal and the Q signal supplied from the amplifier 50 and the amplifier 51 by performing processing such as ADC to generate reception data. The reception data generated by the demodulation/CS unit 52 is supplied to the wireless communication CPU 31, and is output to the control CPU 11. The demodulation/CS unit 52 also performs processing such as carrier sensing as appropriate.

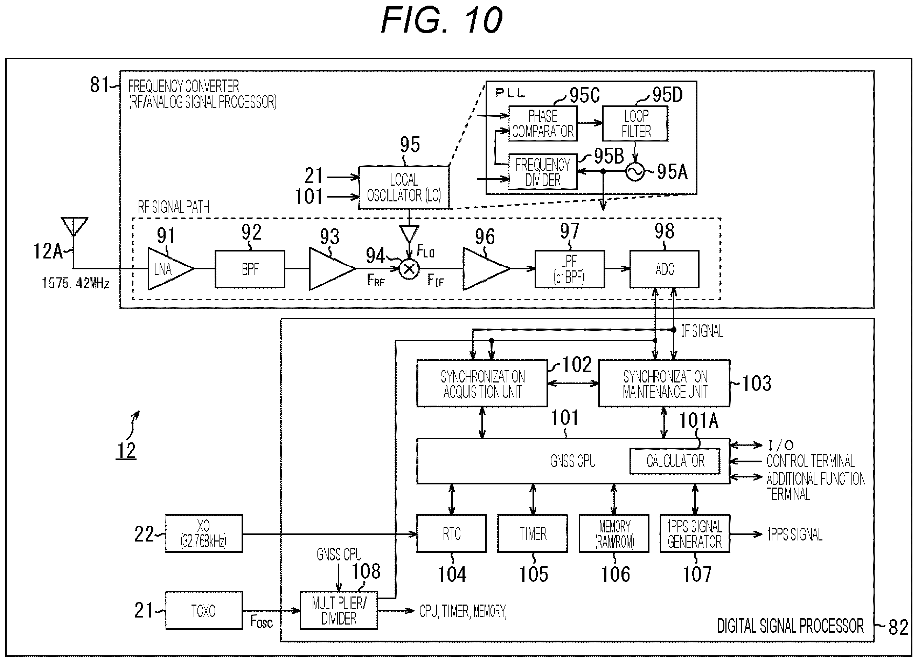

Fig. 10 is a diagram showing a configuration example of the GNSS receiver 12.

As shown in Fig. 10, the GNSS receiver 12 includes a frequency converter 81 and a digital signal processor 82.

The frequency converter 81 as an RF/analog signal processor includes a low noise amplifier (LNA) 91, a BPF 92, an amplifier 93, a mixer 94, a local oscillator 95, an amplifier 96, an LPF 97, and an ADC 98.

The LNA 91 amplifies a reception signal (RF signal) supplied from the antenna 12A in response to reception of radio waves from a satellite, and outputs the amplified signal to the BPF 92.

The BPF 92 performs a filtering process on the reception signal supplied from the LNA 91 and outputs a signal in a predetermined frequency band to the amplifier 93.

The amplifier 93 amplifies the reception signal supplied from the BPF 92 and outputs the amplified signal to the mixer 94.

The mixer 94 performs frequency conversion by multiplying the signal supplied from the amplifier 93 by the local oscillation signal supplied from the local oscillator 95, and outputs an intermediate frequency signal (IF signal).

The local oscillator 95 includes a PLL including a VCO 95A, a frequency divider 95B, a phase comparator 95C, and a loop filter 95D. The local oscillator 95 generates a local oscillation signal having a predetermined frequency on the basis of a clock signal supplied from the TCXO 21, and outputs the local oscillation signal to the mixer 94.

The VCO 95A of the local oscillator 95 oscillates in response to an output from the loop filter 95D, and outputs a signal having a predetermined frequency. The signal output from the VCO 95A is supplied to the frequency divider 95B and is also supplied to the mixer 94 as a local oscillation signal.

The frequency divider 95B sets a predetermined frequency division ratio according to control by the GNSS CPU 101, divides the signal supplied from the VCO 95A, and outputs the result to the phase comparator 95C. The phase comparator 95C compares the phase of the signal supplied from the frequency divider 95B with that of a clock signal supplied from the TCXO 21, and outputs a signal representing the phase difference to the loop filter 95D. The loop filter 95D outputs a voltage representing the phase difference detected by the phase comparator 95C to the VCO 95A.

The amplifier 96 amplifies the IF signal supplied from the mixer 94 and outputs the amplified IF signal to the LPF 97.

The LPF 97 performs a filtering process on the IF signal supplied from the amplifier 96, and outputs a low-frequency component signal to the ADC 98. A BPF may be provided instead of the LPF.

The ADC 98 performs AD conversion on the IF signal supplied from the LPF 97, and outputs an IF signal as digital data to the digital signal processor 82.

The digital signal processor 82 includes a GNSS CPU 101, a synchronization acquisition unit 102, a synchronization maintenance unit 103, an RTC 104, a timer 105, a memory 106, a 1PPS signal generator 107, and a multiplier/divider 108. The IF signal output from the ADC 98 is input to the synchronization acquisition unit 102 and the synchronization maintenance unit 103.

The GNSS CPU 101 controls the operation of the digital signal processor 82 in accordance with a control signal supplied from the control CPU 11. In the GNSS CPU 101, a calculator 101A is implemented by executing a predetermined program.

The calculator 101A calculates the position of the mobile terminal 1, for example, on the basis of information from each satellite included in a message supplied from the synchronization maintenance unit 103. As described above, a message transmitted from the satellite includes information such as an orbital calculation formula and a radio wave transmission time.

In a case where the number of satellites that can be captured is four or more, the calculator 101A obtains the position of the mobile terminal 1 by calculating the aforementioned equations (2) to (5). Additionally, the calculator 101A obtains the velocity of the mobile terminal 1 by calculating the aforementioned equations (9) to (12). The calculator 101A outputs the terminal time Tu and the oscillator frequency error dfu (error in the oscillation frequency of TCXO 21 used by local oscillator 95 to generate local oscillation signal) obtained in these calculations to the 1PPS signal generator 107.

On the other hand, in a case where the number of satellites that can be captured is less than four, the calculator 101A approximately obtains the terminal time Tu by calculating the aforementioned equation (13) on the basis of the position and time of the satellites that can be captured. Additionally, the calculator 101A approximately calculates the oscillator frequency error dfu by calculating the aforementioned equation (14) on the basis of the velocity and the Doppler frequency of the satellites that can be captured. The calculator 101A outputs the terminal time Tu and the oscillator frequency error dfu obtained approximately to the 1PPS signal generator 107.

Note that the GNSS CPU 101 is connected to a control terminal, an I/O terminal, an additional function terminal, and the like. Control signals and the like necessary for controlling each unit are input and output through each terminal.

The synchronization acquisition unit 102 operates in accordance with a clock signal supplied from the multiplier/divider 108, and acquires C/A code synchronization on the basis of the IF signal output from the frequency converter 81. For example, the synchronization acquisition unit 102 detects the C/A code used for message transmission, by converting the IF signal into a baseband signal and obtaining the correlation with an internally generated C/A code.

The synchronization acquisition unit 102 outputs, to the synchronization maintenance unit 103, information obtained by acquiring synchronization, such as the type of the C/A code, the phase of the C/A code, the carrier frequency, and satellite identification information specified on the basis of the C/A code. The information acquired by the synchronization acquisition unit 102 is also supplied to the GNSS CPU 101.

The synchronization maintenance unit 103 operates in accordance with a clock signal supplied from the multiplier/divider 108, and demodulates a message represented by the IF signal output from the frequency converter 81 on the basis of the C/A code and the carrier frequency specified by the synchronization acquisition unit 102. The synchronization maintenance unit 103 outputs the message obtained by demodulation to the GNSS CPU 101.

The RTC 104 measures the terminal time on the basis of a clock signal supplied from the XO 22. The time information measured by the RTC 104 is corrected each time a radio wave from a satellite is received and an accurate time is obtained, for example.

The timer 105 manages the timing of each processing of the GNSS CPU 101.

The memory 106 includes a RAM and a ROM. The program stored in the ROM included in the memory 106 is read by the GNSS CPU 101 and executed using the RAM.

The 1PPS signal generator 107 generates and outputs a 1PPS signal on the basis of the terminal time Tu and the oscillator frequency error dfu supplied from the calculator 101A. The 1PPS signal output from the 1PPS signal generator 107 is supplied to the control CPU 11.

The multiplier/divider 108 multiply or divide the clock signal supplied from the TCXO 21. The multiplier/divider 108 outputs a clock signal obtained by the multiplication or division to each unit in the GNSS receiver 12.

In the above description, the GNSS receiver 12 is provided with the GNSS CPU 101, and the wireless transceiver 13 is provided with the wireless communication CPU 31. However, the control CPU 11 may serve as the CPU of both of the GNSS receiver 12 and the wireless transceiver 13.

<Operation of mobile terminal>

Here, an operation of the mobile terminal 1 having the above configuration will be described.

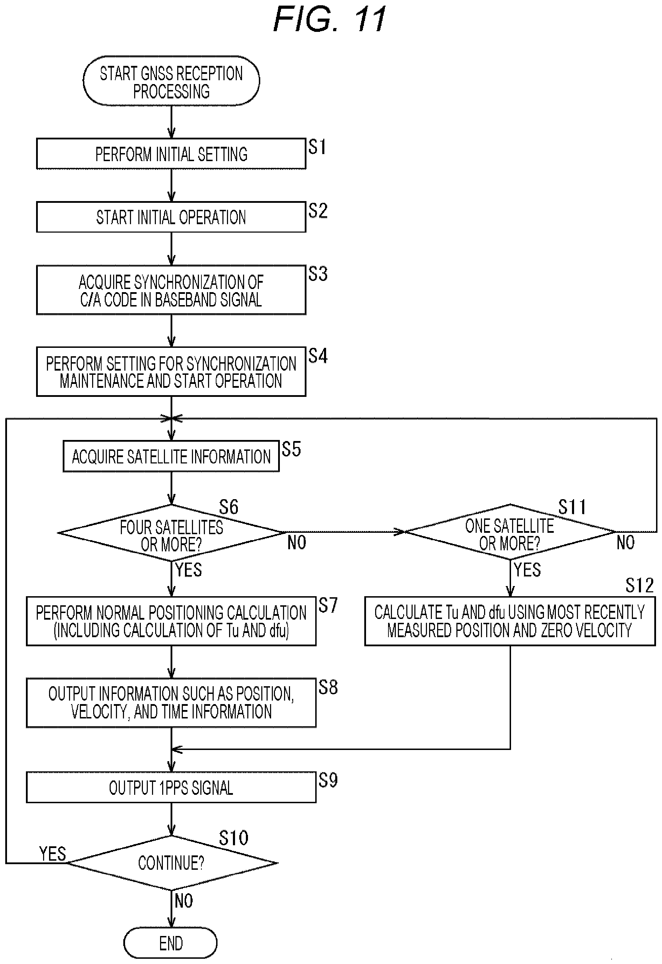

First, reception processing of the GNSS receiver 12 will be described with reference to a flowchart of Fig. 11.

In step S1, the GNSS CPU 101 performs initial setting of each unit of the frequency converter 81.

In step S2, the frequency converter 81 starts an initial operation and performs each processing on the reception signal supplied from the antenna 12A. The IF signal output from the ADC 98 is supplied to the synchronization acquisition unit 102 and the synchronization maintenance unit 103 of the digital signal processor 82.

In step S3, the synchronization acquisition unit 102 converts the IF signal supplied from the ADC 98 into a baseband signal, and acquires synchronization of the C/A code in the baseband signal.

In step S4, the synchronization maintenance unit 103 performs setting for continuing to capture the satellites, and starts the operation of maintaining the synchronization.

Thereafter, information such as satellite identification information is supplied from the synchronization acquisition unit 102 to the GNSS CPU 101, and information such as a message transmitted from the satellite is supplied from the synchronization maintenance unit 103 to the GNSS CPU 101.

In step S5, the GNSS CPU 101 acquires satellite information including satellite identification information on the basis of the information supplied from the synchronization acquisition unit 102 and the synchronization maintenance unit 103. In addition, the calculator 101A of the GNSS CPU 101 performs calculation on the basis of the information supplied from the synchronization acquisition unit 102 and the synchronization maintenance unit 103, and acquires information such as a pseudo range (C (Tu-Ti)), a Doppler frequency (fd), a carrier wave phase, and a signal intensity as satellite information.

In step S6, the GNSS CPU 101 determines whether or not the number of satellites that can be captured is four or more.

If it is determined in step S6 that the number of satellites that can be captured is four or more, in step S7, the calculator 101A performs normal positioning calculation. That is, the calculator 101A calculates the position of the mobile terminal 1 by calculating the aforementioned equations (2) to (5). Additionally, the calculator 101A obtains the velocity of the mobile terminal 1 by calculating the aforementioned equations (9) to (12). The calculator 101A acquires the terminal time Tu and the oscillator frequency error dfu by performing these calculations.

In step S8, the GNSS CPU 101 outputs various types of information such as the position, velocity, and time of the mobile terminal 1. Information output from the GNSS CPU 101 is supplied to the control CPU 11.

In step S9, the 1PPS signal generator 107 generates and outputs a 1PPS signal on the basis of the terminal time Tu and the oscillator frequency error dfu obtained by the calculator 101A.

In step S10, the GNSS CPU 101 determines whether or not to continue reception from satellites. If it is determined to continue, the processing returns to step S5 to continue the above processing.

On the other hand, if it is determined in step S6 that the number of satellites that can be captured is not four or more, in step S11, the GNSS CPU 101 determines whether or not the number of satellites that can be captured is one or more.

If it is determined in step S11 that the number of satellites that can be captured is not one or more, that is, zero, the processing returns to step S5 to repeat the above processing.

If it is determined in step S11 that the number of satellites that can be captured is one or more, that is, one or more and less than four, the processing proceeds to step S12.

In step S12, the calculator 101A approximately obtains the terminal time Tu and the oscillator frequency error dfu, by calculating the following equations (13) and (14) assuming that the current position is the most recently measured position and the moving velocity is zero. In the processing of step S9 after the processing of step S12 is performed, a 1PPS signal is generated and output on the basis of the approximately obtained terminal time Tu and oscillator frequency error dfu.

If it is determined in step S10 that the reception from satellites is not continued, the processing is ended.

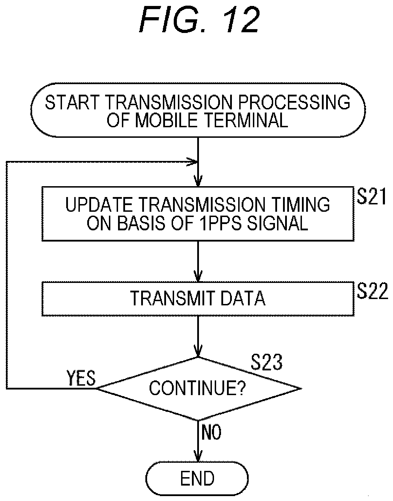

Next, processing of the mobile terminal 1 for transmitting various types of information to the base station 2 will be described with reference to a flowchart of Fig. 12. The processing of Fig. 12 is performed by each unit of the mobile terminal 1 in parallel with the processing of Fig. 11.

In step S21, the timing setting unit 11A of the control CPU 11 updates the data transmission timing by the wireless transceiver 13 with reference to the 1PPS signal generated by the GNSS receiver 12.

If the number of satellites that can be captured is less than four, the data transmission timing is set with reference to the 1PPS signal generated on the basis of the approximately obtained terminal time Tu and oscillator frequency error dfu. With this, even in a case where the number of satellites that can be captured is less than four, time synchronization of wireless communication is maintained.

In step S22, the wireless transceiver 13 transmits data according to the transmission timing set by the timing setting unit 11A. In a case where the number of satellites that can be captured is four or more and positioning is performed, the position information is included in the data transmitted from the wireless transceiver 13.

On the other hand, in a case where the number of satellites that can be captured is less than four, since positioning is not performed, position information is not transmitted. The content of data transmitted in a case where the number of satellites that can be captured is less than four will be described later.

In step S23, the control CPU 11 determines whether or not to continue data transmission. If it is determined to continue, the processing returns to step S21 to repeat the above processing. On the other hand, if it is determined in step S23 to not continue data transmission, the processing is ended.

While Fig. 12 describes a case of transmitting data to the base station 2, the same applies to a case of receiving data transmitted from the base station 2. A reception window is set with reference to the 1PPS signal generated by the GNSS receiver 12, and data transmitted from the base station 2 is received according to the reception window.

With the above processing, even if radio waves from satellites are blocked by buildings, trees, human bodies, and the like, and the number of satellites that can be captured is less than four, the output of 1PPS signal can be continued, and time synchronization of wireless communication can be maintained.

In particular, even in a case where the wireless transceiver 13 is a wireless communication device that supports only unidirectional wireless communication and information necessary for time correction cannot be acquired from an external device such as the base station 2, time synchronization of wireless communication can be maintained.

If the satellite reception status is good, the mobile terminal 1 can generate a 1PPS signal with a precision of several tens of nanoseconds as described above. However, in the wireless communication system of Fig. 6, time synchronization need not be established with such a high precision.

For example, in the base station 2, a reception window is set in consideration of a propagation delay so that a signal from the mobile terminal 1 can be received wherever the mobile terminal 1 is in the communication area. In a case where the radius of the communication area of base station 2 is 30 km, the maximum propagation delay is 100 us. Since propagation delay thus corresponds to time in us units, precision in us units is enough for wireless communication.

Since the time synchronization can be maintained, it is possible to avoid collision of transmission data. By avoiding occurrence of collision of transmission data, it is possible to increase the capacity of the mobile terminal. Hence, a server device (not shown) can manage the position and the like of many monitoring targets. By making it possible to monitor many targets, it is possible to reduce the probability of occurrence of abnormal conditions such as accidents.

<Modification>

While the terminal time Tu has been calculated assuming that the current position is the most recently measured position, the terminal time Tu may be calculated by using positions other than the most recently measured position as Xu, Yu, and Zu.

For example, in a case where the sensor 14 is an acceleration sensor or a gyro sensor and it is detected that there is almost no movement of the mobile terminal 1, a position measured a predetermined time before may be used for the calculation of the terminal time Tu. Additionally, a position obtained by correcting the most recently measured position using sensor data or the like may be used for calculating the terminal time Tu.

In the aforementioned equations (13) and (14), the average of the time and velocity obtained on the basis of information of the satellites that can be captured has been obtained. However, weights may be assigned to the information of the satellites used for the calculation, depending on the state of the satellites.

As a weighting method, there is a method of setting a weight according to the carrier-power-to-noise-density ratio (C/N0) and the elevation angle of the satellite.

For example, in a case where weighting by C/N0 is performed, a value represented by the following equation (15) can be used as a weight Wn.
[Expression 15]

$$W_n = a \times 10^{(C/N0)/10} \qquad \cdots \ (15)$$

a in equation (15) is a constant determined by experience or the like. A value that makes the weight Wn 1 in a case where C/NO is 40 dBHz is used as the constant a, for example.

Note that C/NO is the ratio between the carrier power and noise power of the GNSS signal, and its unit is dBHz. In the case of a GNSS signal of -130 dBm, C/NO is about -41 dBHz in a general receiver. In places where the sky is widely open, it is possible to receive with a C/NO of about 50 dBHz, but in places where the reception environment is not good, C/NO drops to 20 dBHz or less.

The following equation (16) is obtained on the basis of simultaneous equations for position calculation multiplied by the weight Wn.

[Expression 16]

$$Tu \fallingdotseq \Sigma Wn[Tn + \{(Xn-Xu)^2 + (Yn-Yu)^2 + (Zn-Zu)^2\}^{1/2}/C]/N/\Sigma Wn \quad \cdot\cdot\cdot (16)$$

Additionally, the following equation (17) is obtained on the basis of simultaneous equations for velocity calculation multiplied by the weight Wn.

[Expression 17]

$$dfu \fallingdotseq \Sigma Wn[fdn - fc \cdot \{VXn \cdot eXn + VYn \cdot eYn + VZn \cdot eZn\}/C]/N/\Sigma Wn \quad \cdot\cdot\cdot (17)$$

In the calculation of position and velocity, the calculation precision is improved by multiplying each equation forming the simultaneous equations by the weight Wn and solving by the least square method. By calculating equations (16) and (17) using the weight Wn, the accuracy of the terminal time Tu and the oscillator frequency error dfu can be increased, and a highly precise 1PPS signal can be generated.

Although the same weight has been used for the calculation of the terminal time Tu according to the equation (16) and the calculation of the oscillator frequency error dfu according to the equation (17), the weights do not necessarily have to be the same. For example, the value of the constant a used for calculating the weight Wn may be varied between the calculation of the terminal time Tu and the calculation of the oscillator frequency error dfu.

The signal of each satellite received by the GNSS receiver 12 differs depending on C/NO, the influence of multipath due to reflection/diffraction, and the like. By weighting according to the signal reception status of each satellite, it is possible to improve the precision of the terminal time Tu and the oscillator frequency error dfu that are approximately obtained.

<<3. Second embodiment>>

An example of setting the reception window on the reception side in a case where data is transmitted according to the transmission timing set with reference to the 1PPS signal generated in the above manner will be described. As described above, the reception window represents a reception section set on the data reception side in accordance with the transmission timing.

For example, the reception window is set to have a time width equal to or greater than the sum of: the maximum propagation delay time between the mobile terminal 1 and the base station 2 in the communication area, the time according to the maximum packet length, and the time corresponding to an error of the 1PPS signal assumed in a case where the number of reception satellites is less than four.

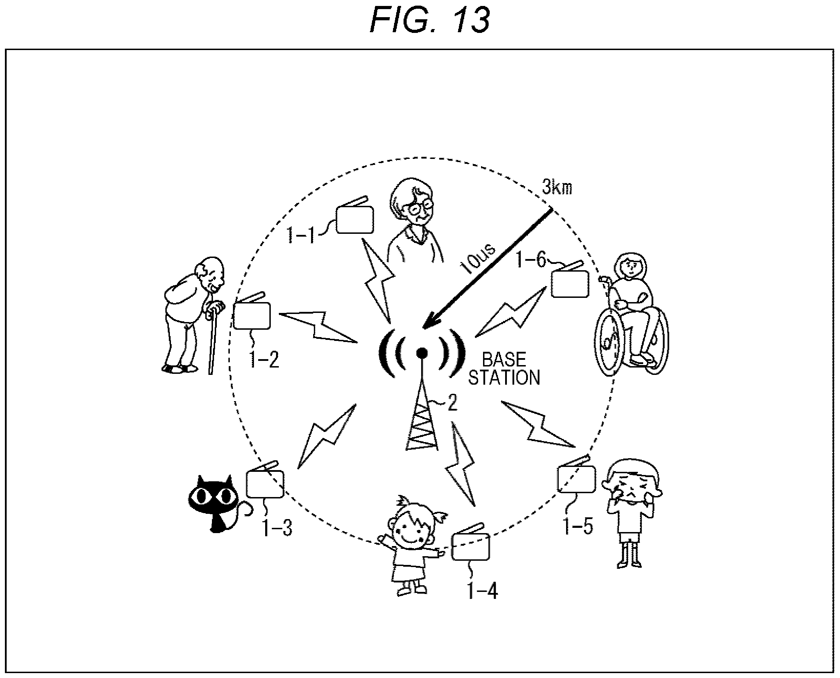

Here, in an LPWA wireless communication system, if the propagation condition is good, communication is possible within a distance of several kilometers to several tens of kilometers. As shown in Fig. 13, if the communication area of one base station 2 is 3 km, for example, the propagation delay is 10 us at the maximum as indicated by an arrow.

Assume that the moving distance from the most recent position of a mobile terminal 1 (position where positioning was most recently performed) is within 300 m and the moving velocity is within 10 m/s. In this case, the deviation of the terminal time Tu is 1 us or less, and the oscillator frequency error dfu is within 0.033 ppm. With reference to the timing at which the terminal time Tu and the oscillator frequency error dfu are obtained, the deviation of the terminal time Tu after one second is 0.033 us at the maximum, and the deviation of the terminal time Tu after one minute is 2 us at the maximum.

Further, assume that the reception synchronization error due to noise or the like is within ±0.5 us.

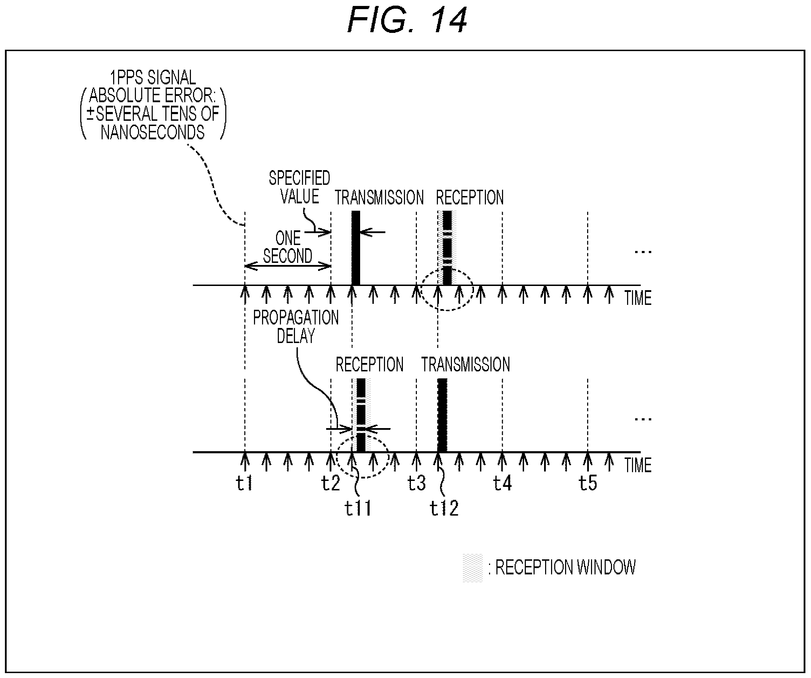

Fig. 14 is a diagram showing an example of communication in a wireless communication system. The upper part of Fig. 14 shows a data transmission timing and reception timing by the mobile terminal 1, and the lower part shows a data reception timing and transmission timing by the base station 2. Description overlapping with the description of Fig. 7 is omitted as appropriate.

Data transmitted from the mobile terminal 1 at the timing of time t11, which is a time after passage of a time corresponding to a specified value from time t2, is received according to a reception window whose start time is set to time t11 in the base station 2. In Fig. 14, transmission data is indicated by a thick solid line and reception data is indicated by a thick alternate long and short dash line, which shows that it takes time corresponding to the packet length to transmit and receive transmission data.

Additionally, data transmitted from the base station 2 at the timing of time t12, which is a time after passage of a time corresponding to a specified value from time t3, is received according to a reception window whose start time is set to time t12 in the mobile terminal 1.

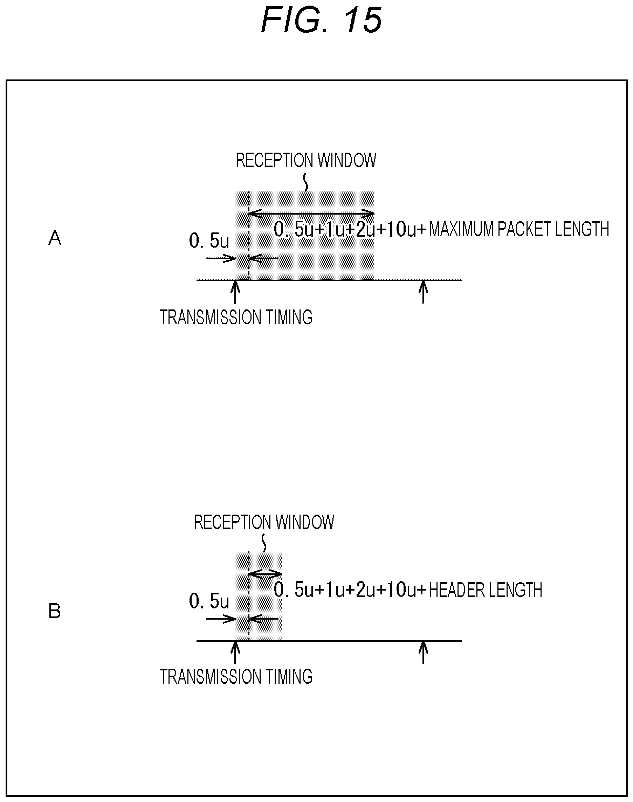

Fig. 15 is a diagram illustrating examples of setting a reception window surrounded by a broken-line circle in Fig. 14.

The communication area of the base station 2, the moving distance of the mobile terminal 1, and the moving velocity of the mobile terminal 1 are set as described above, the elapsed time is one minute, and the reception synchronization error is within ±0.5 us.

In this case, as shown in A of Fig. 15, the time width of the reception window is set such that the start time is the transmission timing, and the end time is a time after passage of 0.5 us from the start time, and then passage of a time corresponding to 13.5 us + the maximum packet length.

0.5 us corresponds to the reception synchronization error, and 1 us corresponds to the maximum terminal time Tu deviation in a case where the moving distance is within 300 m and the moving velocity is within 10 m/s. 2 us corresponds to the deviation of the terminal time Tu according to the elapsed time, and 10 us corresponds to the maximum value of propagation delay in a case where the communication area of the base station 2 is 3 km.

By setting a reception window having at least such a time width, the base station 2 can reliably receive data transmitted from the mobile terminal 1, even if the 1PPS signal is generated on the basis of an approximately calculated value.

Instead of the packet length, a header length may be used as an element included in the time width of the reception window. In this case, as shown in B of Fig. 15, the time width of the reception window is set such that the start time is the transmission timing, and the end time is a time after passage of 0.5 us from the start time, and then passage of a time corresponding to 13.5 us + header length.

On the reception side, if no header is detected during the reception window, the data reception processing is ended at the timing of the reception window end time. Meanwhile, if a header is detected during the reception window, the data reception processing is continued after the timing of the reception window end time. As a result, the processing burden on the reception side can be reduced.

<<4. Third embodiment>>

In a mobile terminal 1, in a case where the number of received satellites is less than four, although positioning cannot be performed, a 1PPS signal is generated, and thereby time synchronization of wireless communication with a base station 2 can be maintained. Information other than position information is transmitted to the base station 2 by wireless communication in which time synchronization is maintained.

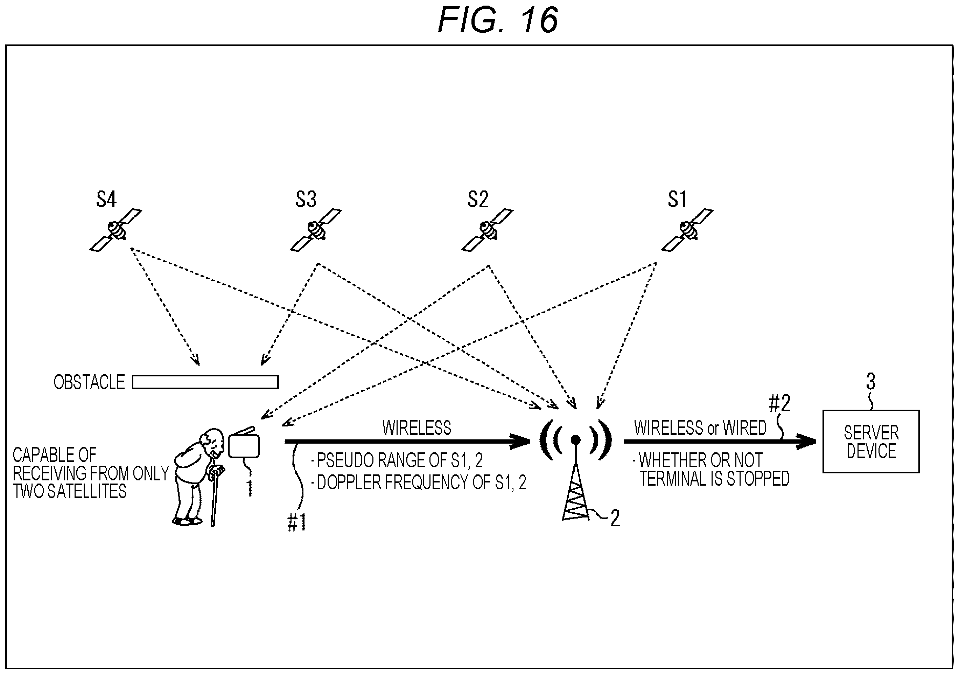

Fig. 16 is a diagram showing an example of data transmission/reception in a wireless communication system.

As shown in Fig. 16, assume that the mobile terminal 1 can receive radio waves only from two satellites S1 and S2. Although the mobile terminal 1 cannot perform positioning, the mobile terminal 1 generates a 1PPS signal and maintains time synchronization of wireless communication with the base station 2.

As indicated by an arrow #1, the mobile terminal 1 transmits the pseudo range between the satellite S1 and the satellite S2 and the Doppler frequency of the satellite S1 and the satellite S2 to the base station 2 as actual measurement data.

The pseudo range is obtained using the time of the satellite that can be captured and the terminal time Tu (equations (2) to (5)). In the calculation of the pseudo range, time measured by the RTC 104 of the GNSS receiver 12 is used as the terminal time Tu, for example. The Doppler frequency is information acquired from a satellite that can be captured (equations (9) to (12)).

The base station 2 receives the actual measurement data transmitted from the mobile terminal 1 and determines whether or not the mobile terminal 1 (user carrying mobile terminal 1) is moving.

Whether or not the mobile terminal 1 is moving is determined on the basis of the difference between the actual measurements of the pseudo range and Doppler frequency represented by the data transmitted from the mobile terminal 1 and the approximate values of the pseudo range and Doppler frequency obtained from the approximate position of the mobile terminal 1, for example. In the base station 2, the approximate position of the mobile terminal 1 can be specified on the basis of information continuously transmitted from the mobile terminal 1.

A determination as to whether or not the mobile terminal 1 is moving may be made on the basis of fluctuation in the difference between the actual measurement and the approximate value.

As indicated by an arrow #2, the base station 2 transmits information indicating whether or not the mobile terminal 1 is moving to a server device 3. Communication between the base station 2 and the server device 3 may be wireless communication or wired communication.

The server device 3 is a server that manages the position and the like of each mobile terminal 1. The server device 3 receives the information transmitted from the base station 2, and manages it in association with the identification information of the mobile terminal 1. Although the server device 3 cannot provide an accurate position, it can provide whether or not the mobile terminal 1 is moving.

The pseudo range and Doppler frequency information transmitted from the mobile terminal 1 may be transmitted directly from the base station 2 to the server device 3, and the server device 3 may determine whether or not the mobile terminal 1 is moving. The mobile terminal 1 itself may determine whether or not it is moving, and the determination result may be transmitted from the mobile terminal 1.

<Configuration example of base station 2>

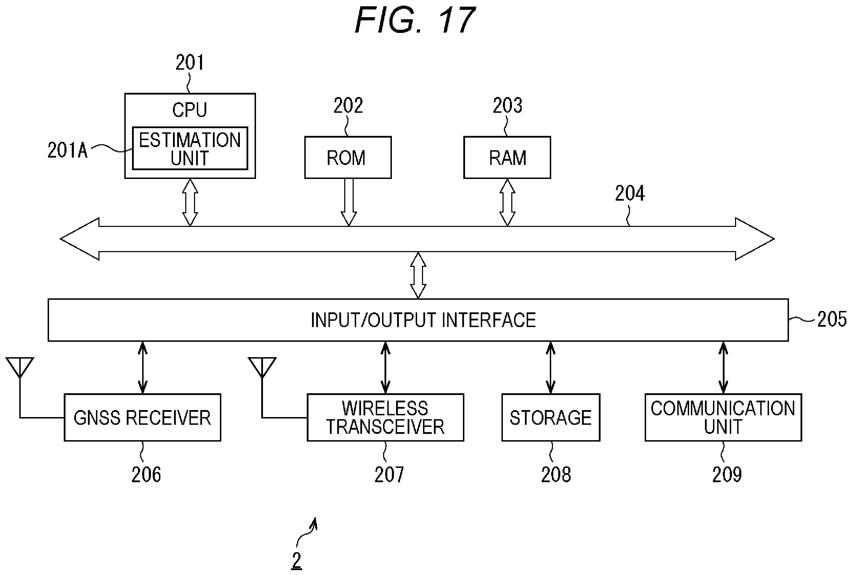

Fig. 17 is a block diagram showing a configuration example of the base station 2.

A CPU 201, a ROM 202, and a RAM 203 are connected to each other through a bus 204. The CPU 201 loads a program stored in the ROM 202 or a storage 208 to the RAM 203 and executes it, and controls the overall operation of the base station 2.

In the CPU 201, an estimation unit 201A is implemented by executing a predetermined program. On the basis of information transmitted from the mobile terminal 1, the estimation unit 201A determines whether or not the mobile terminal 1 is moving. The estimation unit 201A functions as an estimation unit that estimates the state of the mobile terminal 1. The determination result by the estimation unit 201A is transmitted to the server device 3 by a communication unit 209.

An input/output interface 205 is connected to the bus 204. The input/output interface 205 is connected to a GNSS receiver 206, a wireless transceiver 207, the storage 208, and the communication unit 209.

The GNSS receiver 206 similar functions as the GNSS receiver 12 of the mobile terminal 1. The GNSS receiver 206 receives radio waves from a satellite, obtains the position of the base station 2, and generates and outputs a 1PPS signal. The 1PPS signal output from the GNSS receiver 206 is supplied to the wireless transceiver 207 and used for time synchronization of wireless communication with each mobile terminal 1.

The wireless transceiver 207 has similar functions as the wireless transceiver 13 of the mobile terminal 1. The wireless transceiver 207 sets the transmission/reception timing for performing communication with each mobile terminal 1 existing in the communication area managed by the base station 2, on the basis of the 1PPS signal. The wireless transceiver 207 receives and outputs data transmitted from the mobile terminal 1. The data output from the wireless transceiver 207 is supplied to the communication unit 209 and transmitted to the server device 3. Additionally, the wireless transceiver 207 transmits data to the mobile terminal 1 as appropriate.

The storage 208 includes a hard disk, a non-volatile memory, or the like, and receives various data.

The communication unit 209 includes a network interface or the like, and performs communication with the server device 3 through a network such as the Internet. For example, the communication unit 209 transmits data transmitted from the mobile terminal 1 and received by the wireless transceiver 207 to the server device 3.

<Operation of each device>

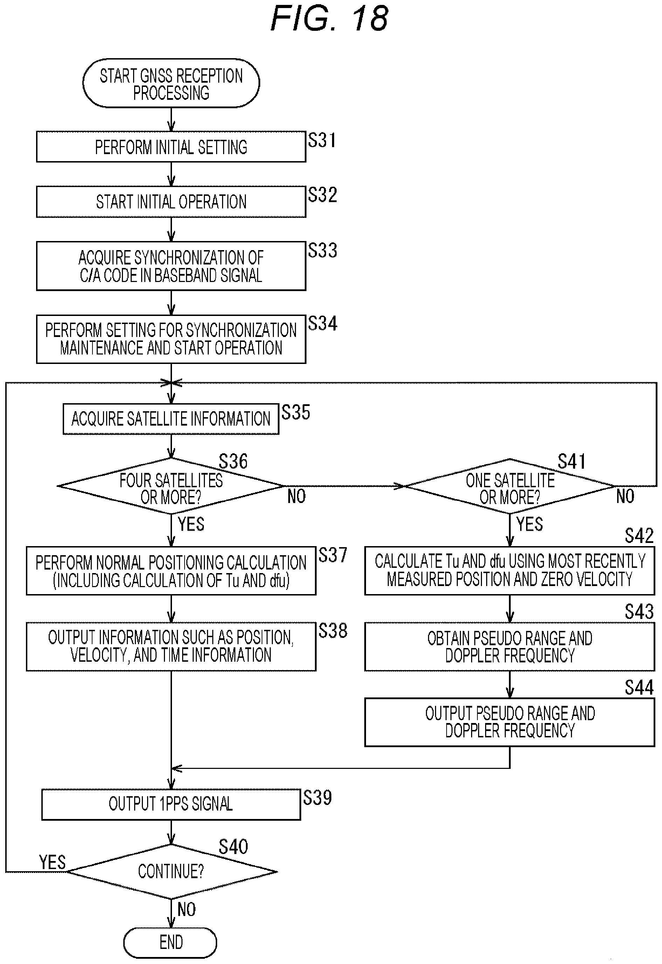

Here, reception processing of the GNSS receiver 12 of the mobile terminal 1 will be described with reference to a flowchart of Fig. 18.

The processing of steps S31 to S42 in Fig. 18 are similar to those of the processing in steps S1 to S12 in Fig. 11. Overlapping descriptions will be omitted as appropriate.

That is, in a case where it is determined in step S41 that the number of satellites that can be captured is 1 or more and less than 4, in step S42, a calculator 101A approximately obtains the terminal time Tu and the oscillator frequency error dfu. A 1PPS signal is generated using the approximately obtained terminal time Tu and oscillator frequency error dfu (step S39).

In step S43, the calculator 101A obtains the pseudo range and the Doppler frequency on the basis of information from the captured satellite. The terminal time Tu obtained in step S42 may be used for the calculation of the pseudo range.

In step S44, the calculator 101A outputs information of the pseudo range and the Doppler frequency. In a case where the number of satellites that can be acquired is 1 or more and less than four, the pseudo range and the Doppler frequency are thus repeatedly output from the calculator 101A.

Information output from the calculator 101A is supplied to the control CPU 11, and is transmitted to the base station 2 as actual measurement data by performing the processing of Fig. 12.

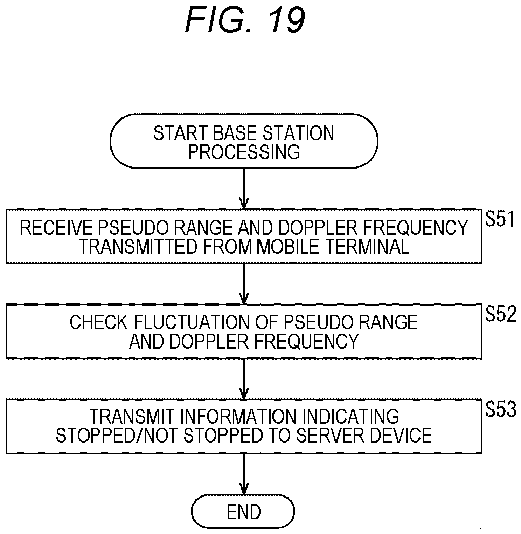

Next, processing of the base station 2 performed corresponding to the processing of Fig. 18 will be described with reference to a flowchart of Fig. 19.

In step S51, the wireless transceiver 207 receives the actual measurement data of the pseudo range and the Doppler frequency transmitted from the mobile terminal 1.

In step S52, the estimation unit 201A compares the actual measurement data of the pseudo range and the Doppler frequency transmitted from the mobile terminal 1 with approximate values, and checks the fluctuation of the pseudo range and the Doppler frequency. For example, it is determined that the mobile terminal 1 is moving if the fluctuation amount of the pseudo range and the Doppler frequency is larger than a threshold, and it is determined that the mobile terminal 1 is not moving if the fluctuation amount is smaller than the threshold.

The determination as to whether or not the mobile terminal 1 is moving may be made on the basis of any one of the pseudo range and the Doppler frequency instead of both.

In step S53, the communication unit 209 transmits, to the server device 3, information indicating whether or not the mobile terminal 1 is moving, which represents the determination result by the estimation unit 201A.

The above processing is performed every time the actual measurement data of the pseudo range and the Doppler frequency is transmitted from the mobile terminal 1.

<Estimation of position of mobile terminal 1>

In a case where the position of the mobile terminal 1 can be estimated, the estimated position may be managed in the server device 3 together with the pseudo range and the Doppler frequency.

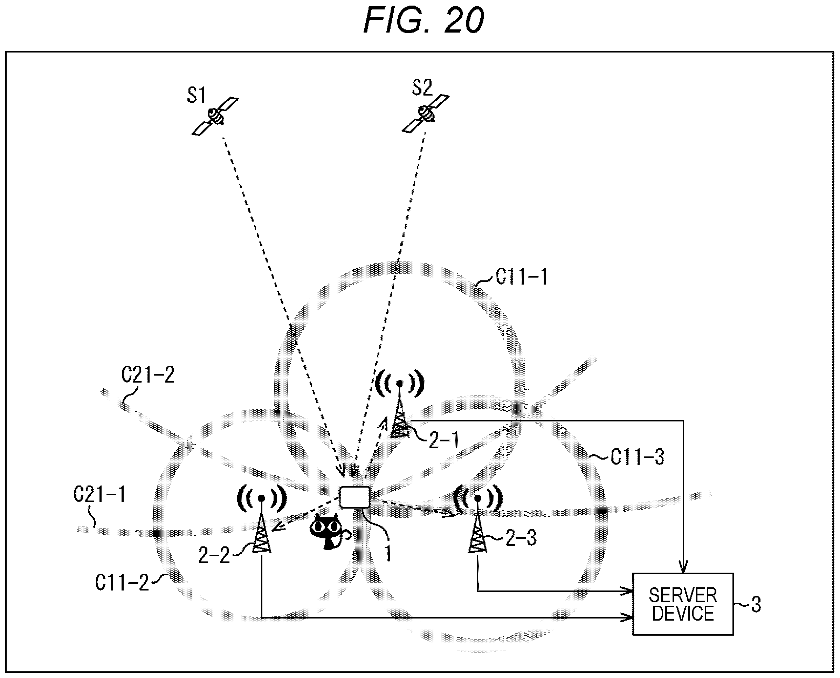

Fig. 20 is a diagram showing a configuration example of a wireless communication system in which the server device 3 estimates the position of the mobile terminal 1.

In the example of Fig. 20, base stations 2-1 to 2-3 are shown, each connected to the server device 3 through a network. The mobile terminal 1 exists in a position where the communication areas of the base stations 2-1 to 2-3 overlap, and can communicate with each of the base stations 2-1 to 2-3.

Time synchronization of wireless communication with each of the base stations 2-1 to 2-3 is maintained when the mobile terminal 1 receives radio waves from satellites S1 and S2. In the base stations 2-1 to 2-3, a reception window is set at the same timing, and data transmitted from the mobile terminal 1 is received at a certain timing.

The base stations 2-1 to 2-3 receive information of the pseudo range and the Doppler frequency transmitted from the mobile terminal 1, and each detects the propagation delay. The base stations 2-1 to 2-3 transmit the detected propagation delay information to the server device 3. As described with reference to Fig. 7, the data transmitted from the mobile terminal 1 is received by the base stations 2-1 to 2-3 at a timing after passage of a time corresponding to the transmission delay from the transmission timing. The sizes of circles C11-1 to C11-3 in Fig. 20 each indicate the size of the propagation delay.

Information transmitted from the base stations 2-1 to 2-3 to the server device 3 includes information indicating the determination result as to whether or not the mobile terminal 1 is moving determined as appropriate by the base stations 2-1 to 2-3, together with the pseudo range and Doppler frequency information transmitted from the mobile terminal 1.

The server device 3 estimates the position of the mobile terminal 1 on the basis of the propagation delay detected by the base stations 2-1 to 2-3. The position of the mobile terminal 1 can be estimated as the position of the intersection of the circles C11-1 to C11-3 corresponding to the propagation delay and centered on the respective base stations.

Assuming that the height of the mobile terminal 1 is not taken into account, if the data from the mobile terminal 1 can be received by three or more base stations 2, the position of the mobile terminal 1 can be estimated.

For example, the server device 3 manages the positions of the satellites S1 and S2 at each time, measured by the base stations 2-1 to 2-3 and supplied from the base stations 2-1 to 2-3.

In this case, the position of the mobile terminal 1 can be estimated as the position of the intersection of a sphere centered on the position of the satellite S1 and whose radius is the pseudo range of the satellite S1 detected by the mobile terminal 1, and a sphere centered on the position of the satellite S2 and whose radius is the pseudo range of the satellite S2 detected by the mobile terminal 1. An arc C21-1 in Fig. 20 represents a sphere centered on the position of the satellite S1, and an arc C21-2 represents a sphere centered on the position of the satellite S2.

By thus performing calculation on the basis not only of propagation delay, but also the position of the satellite position and the pseudo range, it is possible to improve the precision of position estimation. In a case where the sum of the number of base stations 2 that can receive data from the mobile terminal 1 and the number of satellites that the mobile terminal 1 can capture is four or more, the position including the height of the mobile terminal 1 can be estimated.

The position of the mobile terminal 1 estimated in this manner is managed by the server device 3. Although the position of the mobile terminal 1 is an estimated value and includes an error, a wider range of information can be provided.

<Configuration example of server device 3>

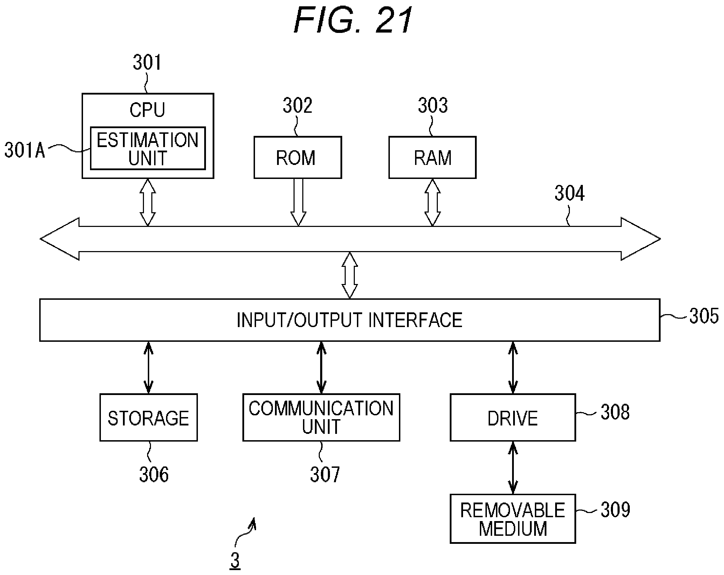

Fig. 21 is a block diagram showing a configuration example of the server device 3.

A CPU 301, a ROM 302, and a RAM 303 are connected to each other through a bus 304. The CPU 301 loads a program stored in the ROM 302 or a storage 306 to the RAM 303 and executes it, and controls the overall operation of the server device 3.

In the CPU 301, an estimation unit 301A is implemented by executing a predetermined program. The estimation unit 301A estimates the position of the mobile terminal 1 on the basis of the propagation delay information transmitted from the base station 2. The estimation unit 301A estimates the position of the mobile terminal 1 as appropriate on the basis not only of the propagation delay but also the position of the satellite captured by the mobile terminal 1. The estimation unit 301A functions as an estimation unit that estimates the state of the mobile terminal 1.

An input/output interface 305 is connected to the bus 304. The input/output interface 305 is the storage 306, a communication unit 307, and a drive 308.

The storage 306 includes a hard disk, a non-volatile memory, or the like, and manages various types of information related to the state of the mobile terminal 1 such as the position of the mobile terminal 1 and whether or not it is moving, in association with identification information. Information managed by the storage 306 is appropriately provided to a client device operated by a user who monitors the state of the monitoring target.

The communication unit 307 includes a network interface or the like, and performs communication with the base station 2. The communication unit 307 receives information transmitted from the base station 2, and outputs the information to the storage 306.

The drive 308 reads data stored in a removable medium 309 and writes data to the removable medium 309.

<Operation of server device 3>

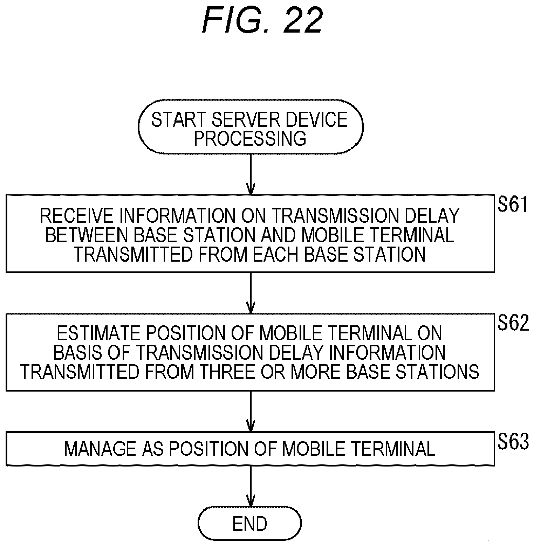

Here, processing of the server device 3 will be described with reference to a flowchart of Fig. 22.

In step S61, the communication unit 307 receives information of the propagation delay between the base station 2 and the mobile terminal 1 transmitted from each base station 2. In a case where the processing of Fig. 19 is performed, the base station 2 also transmits the pseudo range and Doppler frequency information transmitted from the mobile terminal 1 and information indicating the determination result as to whether or not the mobile terminal 1 is moving. The communication unit 307 also receives these pieces of information.

In step S62, the estimation unit 301A estimates the position of the mobile terminal 1 on the basis of propagation delay information transmitted from three or more base stations 2. The estimation of the mobile terminal 1 is performed on the basis also of the position of the satellite captured by the mobile terminal 1 as appropriate.

In step S63, the estimation unit 301A sets the estimated position as the current position of the mobile terminal 1, and stores it in the storage 306 for management.

As described above, since the time synchronization of wireless communication can be maintained even when the number of satellites that can be captured is less than four, the mobile terminal 1 can transmit various types of information to the base station 2.

Reception side devices (base station 2 and server device 3) that receive information from the mobile terminal 1 can determine whether or not the mobile terminal 1 is moving or estimate the position of the mobile terminal 1. Hence, it is possible to provide a wider range of information.

<<5. Fourth embodiment>>

While the determination as to whether or not the mobile terminal 1 is moving has been made on the basis of the pseudo range and the Doppler frequency, the determination may be made on the basis of other information detected by the mobile terminal 1.

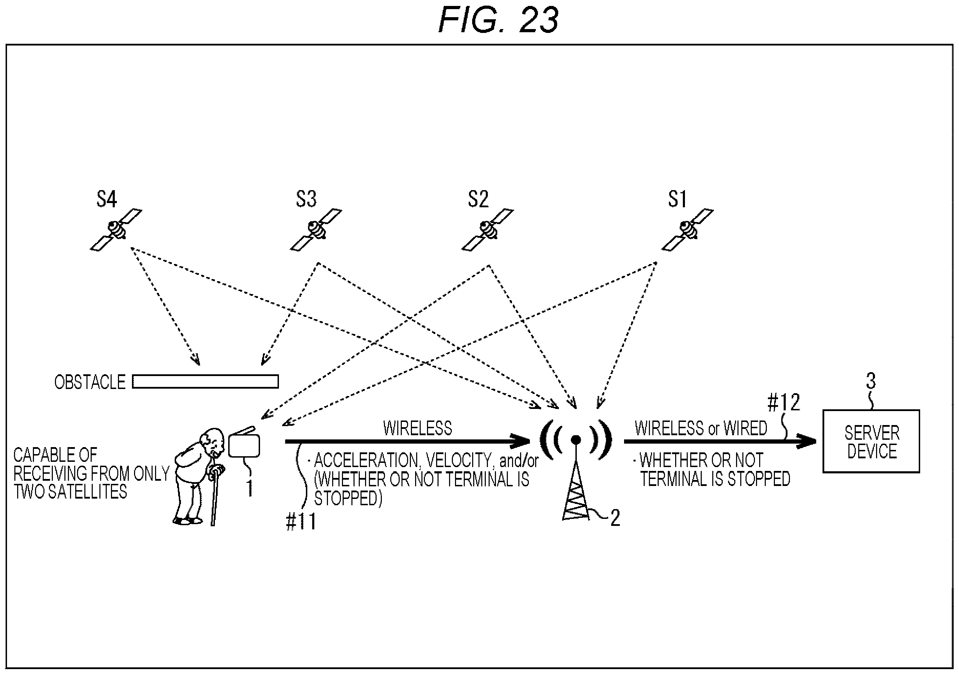

Fig. 23 is a diagram showing another example of data transmission/reception in a wireless communication system. Of the configurations shown in Fig. 23, configurations described with reference to Fig. 16 are denoted with the same reference numerals. Overlapping descriptions will be omitted as appropriate.

Assume that a mobile terminal 1 can receive radio waves only from two satellites S1 and S2. Although the mobile terminal 1 cannot perform positioning, the mobile terminal 1 generates a 1PPS signal and maintains time synchronization of wireless communication with the base station 2.

As indicated by an arrow #11, the mobile terminal 1 transmits sensor data representing an acceleration and velocity detected by a built-in sensor 14 to the base station 2. As described with reference to Fig. 8, the mobile terminal 1 is provided with the sensor 14 such as an acceleration sensor or a gyro sensor.

The base station 2 receives the sensor data transmitted from the mobile terminal 1 and determines whether or not the mobile terminal 1 is moving. The determination as to whether the mobile terminal 1 is moving may be made by comparing the sensor data transmitted from the mobile terminal 1 at a certain timing with the sensor data transmitted at the previous timing. As indicated by an arrow #12, the base station 2 transmits information indicating whether or not the mobile terminal 1 is moving to a server device 3.

The server device 3 receives the information transmitted from the base station 2, and manages it in association with the identification information of the mobile terminal 1. Although the server device 3 cannot provide an accurate position, it can provide whether or not the mobile terminal 1 is moving.

The sensor data transmitted from the mobile terminal 1 may be transmitted directly from the base station 2 to the server device 3, and the server device 3 may determine whether or not the mobile terminal 1 is moving. The mobile terminal 1 itself may determine whether or not it is moving, and the determination result may be transmitted from the mobile terminal 1.

By determining whether or not the mobile terminal 1 is moving on the basis of the sensor data, it is possible to improve the precision of the determination as compared to the case where the determination is based on the pseudo range or the Doppler frequency.

The position of the mobile terminal 1 may be estimated on the basis of the sensor data. In this case, the position of the mobile terminal 1 is estimated by the mobile terminal 1, the base station 2, or the server device 3.

<<6. Fifth embodiment>>

When generating a 1PPS signal in a case where the number of satellites that can be captured is less than four, an oscillator frequency error dfu is obtained. In addition to maintenance of the time synchronization of wireless communication, an error from a specified frequency of the transmission frequency of a wireless transceiver 13 may be corrected on the basis of the oscillator frequency error dfu.

In this case, a wireless communication CPU 31, for example, performs control for adjusting the frequency division ratio of a Fractional-N PLL 42 of the wireless transceiver 13 on the basis of the oscillator frequency error dfu and adjusting the transmission frequency to a specified frequency.

For example, assume that the oscillation frequency of a TCXO 21 is shifted by 4.26 Hz, and data transmission is performed with a transmission frequency of 920 MHz. In this case, the frequency division ratio of the Fractional-N PLL 42 is set so that the ratio of the LO oscillation frequency of the Fractional-N PLL 42 to the oscillation frequency of the TCXO 21 is 35.38460959 expressed by the following equation (18).

[Expression 18]

$$920 \mathrm{MHz} / 26.00000426 \mathrm{MHz} = 35.38460959 \quad \cdots (18)$$

In a case where such correction is not performed, the ratio of the LO oscillation frequency of the Fractional-N PLL 42 to the oscillation frequency of the TCXO 21 is 35.38461538 expressed by the following equation (19), and the frequency difference from the above is about 151 Hz.

[Expression 19]

$$920 \mathrm{MHz} / 26 \mathrm{MHz} = 35.38461538 \quad \cdots (19)$$

By correcting the frequency division ratio of the Fractional-N PLL 42 on the basis of the oscillator frequency error dfu, it is possible to reduce the error of the transmission frequency.

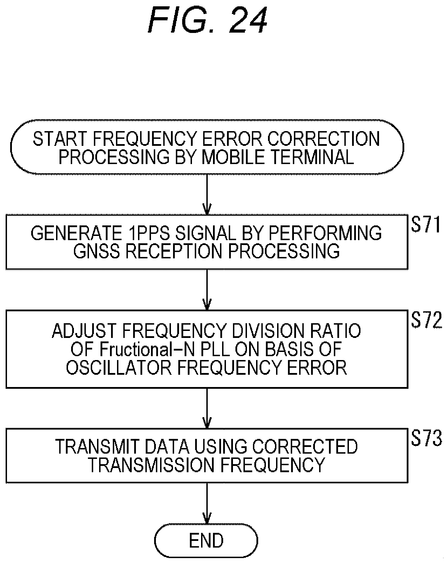

Here, with reference to a flowchart of Fig. 24, processing of the mobile terminal 1 for correcting the transmission frequency error in the above manner will be described.

In a case where the number of satellites that can be captured is less than four, in step S71, a GNSS receiver 12 generates a 1PPS signal by performing the processing described with reference to Fig. 11 and other drawings. In the process of generating the 1PPS signal, the oscillator frequency error dfu is obtained by a calculator 101A. Information of the oscillator frequency error dfu is supplied to the wireless transceiver 13.

In step S72, the wireless communication CPU 31 of the wireless transceiver 13 adjusts the frequency division ratio of the Fractional-N PLL 42 on the basis of the oscillator frequency error dfu.

In step S73, each unit of a signal processor 32 transmits data using the corrected transmission frequency generated by adjusting the frequency division ratio.

With the above processing, it is possible to keep the transmission frequency close to a specified frequency.

The base station 2 can narrow the range of the reception frequency used for data reception, and can reduce the load of reception processing.

<Modification>

While the mobile terminal 1 is used for watching the monitoring target, it can be used for various purposes in which a position is measured.

The series of processings described above can be performed by hardware or software. In a case where the series of processings are executed by software, a program included in the software is installed in a computer incorporated in dedicated hardware, a general-purpose personal computer, or the like.

The program to be installed is provided by being recorded on the removable medium 309 shown in Fig. 21, which includes an optical disc (compact disc-read only memory (CD-ROM), digital versatile disc (DVD), or the like), a semiconductor memory, and the like. Also, the program may be provided through a wired or wireless transmission medium such as a local area network, the Internet, or digital broadcasting. The program can be installed in advance in the ROM 302 or the storage 306.

The program executed by the computer may be a program that performs processing in chronological order according to the order described in the present specification, or may be a program that performs processing in parallel, or at a necessary timing such as when a call is made.

Note that in the present specification, a system means a collection of multiple components (devices, modules (parts), and the like), and it does not matter whether or not all the components are in the same case. For this reason, multiple devices housed in separate casings and connected through a network, and one device housing multiple modules in one casing are both systems.

Embodiments of the present technology are not limited to the above-described embodiments, and various modifications can be made without departing from the scope of the present technology.

For example, the present technology can have a cloud computing configuration in which one function is shared and processed by multiple devices through a network.

Additionally, each step described in the above-described flowchart can be executed by one device or be executed in a shared manner by multiple devices.

Moreover, in a case where multiple processes are included in one step, the multiple processes included in one step can be executed by being shared by multiple devices in addition to being executed by one device.

Note that the effect described in the present specification is merely an illustration and is not restrictive. Hence, other effects can be obtained.

• Example of combination of configuration

The present technology can also be configured as follows.

(1) A mobile terminal including
a positioning unit that, in a case where a number of satellites that can be captured is less than a predetermined number, does not perform positioning, and generates and outputs pulse signals at predetermined intervals synchronized with a time of the satellite that can be captured, on the basis of information from the satellite, and
a wireless communication unit that maintains time synchronization of wireless communication with an external device with reference to the pulse signal, and performs the wireless communication.
(2) The mobile terminal according to (1), in which
the positioning unit generates the pulse signal by performing calculation assuming that a most recently measured position is a position of the mobile terminal and a moving velocity is zero.
(3) The mobile terminal according to (2), in which
the positioning unit calculates an internal time of the mobile terminal on the basis of a position of the satellite that can be captured and a time of the satellite, and calculates a frequency error of an internal oscillator of the mobile terminal on the basis of a velocity of the satellite that can be captured and a Doppler frequency of the satellite, to generate the pulse signal on the basis of the internal time and the frequency error.
(4) The mobile terminal according to any one of (1) to (3), in which the predetermined number is four.
(5) The mobile terminal according to any one of (1) to (4), in which the pulse signal is a 1PPS signal.
(6) The mobile terminal according to any one of (1) to (5), in which
The wireless communication unit transmits data according to a timing set with reference to the pulse signal.
(7) The mobile terminal according to any one of (1) to (6), in which
the wireless communication unit sets a reception window at a timing corresponding to a timing at which the external device transmits data with reference to the pulse signal, and receives data transmitted by the external device during a period of the reception window.

(8) The mobile terminal according to (7), in which
the wireless communication unit sets the reception window with a time width equal to or greater than a sum of: an assumed maximum propagation delay time in a communication area of the external device, a time according to a packet length of a packet used for transmission of the data, and a time corresponding to an assumed error of an internal time of the mobile terminal.

(9) The mobile terminal according to (8), in which
the wireless communication unit sets the reception window with a time width equal to or greater than a time obtained by further adding a time corresponding to a reception synchronization error.

(10) The mobile terminal according to any one of (1) to (9), in which
the positioning unit calculates a pseudo range and a Doppler frequency on the basis of information from the satellite that can be captured, and
the wireless communication unit transmits information of the pseudo range and the Doppler frequency.

(11) The mobile terminal according to any one of (1) to (10) further including a sensor including an acceleration sensor, in which
the wireless communication unit transmits sensor data detected by the sensor.

(12) The mobile terminal according to (3) further including a control unit that corrects an error of a transmission frequency with respect to a specified frequency in the wireless communication, on the basis of the frequency error.

(13) An information processing method including the steps of:

in a case where a number of satellites that can be captured is less than a predetermined number, not performing positioning, and generating and outputting, from a positioning unit, pulse signals at predetermined intervals synchronized with a time of the satellite that can be captured, on the basis of information from the satellite; and maintaining time synchronization of wireless communication with an external device of a wireless communication unit with reference to the pulse signal, and performing the wireless communication.

(14) A program that causes a computer to execute processing including the steps of:

in a case where a number of satellites that can be captured is less than a predetermined number, not performing positioning, and generating and outputting, from a positioning unit, pulse signals at predetermined intervals synchronized with a time of the satellite that can be captured, on the basis of information from the satellite; and maintaining time synchronization of wireless communication with an external device of a wireless communication unit with reference to the pulse signal, and performing the wireless communication.

(15) An information processor including
a communication unit that receives information transmitted from a mobile terminal that, in a case where a number of satellites that can be captured is less than a predetermined number, does not perform positioning, generates and outputs, from a positioning unit, pulse signals at predetermined intervals synchronized with a time of the satellite that can be captured, on the basis of information from the satellite, and maintains time synchronization of wireless communication with an external device of a wireless communication unit with reference to the pulse signal, and
an estimation unit that estimates a state of the mobile terminal on the basis of information received by the communication unit.

(16) The information processor according to (15), in which
the estimation unit estimates whether or not the mobile terminal is moving on the basis of a pseudo range and a Doppler frequency obtained by the mobile terminal on the basis of information from the satellite that can be captured, or on the basis of sensor data detected by the mobile terminal.

(17) The information processor according to (15) or (16), in which
the estimation unit estimates a position of the mobile terminal on the basis of transmission delay in a case where information transmitted by the mobile terminal is received by a plurality of the external devices.

(18) An information processing method including the steps of:

receiving information transmitted from a mobile terminal that, in a case where a number of satellites that can be captured is less than a predetermined number, does not perform positioning, generates and outputs, from a positioning unit, pulse signals at predetermined intervals synchronized with a time of the satellite that can be captured, on the basis of information from the satellite, and maintains time synchronization of wireless communication with an external device of a wireless communication unit with reference to the pulse signal, and estimating a state of the mobile terminal on the basis of received information.

(19) A program that causes a computer to execute processing including the steps of:

receiving information transmitted from a mobile terminal that, in a case where a number of satellites that can be captured is less than a predetermined number, does not perform positioning, generates and outputs, from a positioning unit, pulse signals at predetermined intervals synchronized with a time of the satellite that can be captured, on the basis of information from the satellite, and maintains time synchronization of wireless communication with an external device of a wireless communication unit with reference to the pulse signal, and estimating a state of the mobile terminal on the basis of received information.

REFERENCE SIGNS LIST

| | |
|---|---|
| 1-1 to 1-6 | Mobile terminal |
| 2-1 to 2-5 | Base station |
| 3 | Server device |
| 11 | Control CPU |
| 12 | GNSS receiver |
| 13 | Wireless transceiver |
| 14 | Sensor |
| 31 | Wireless communication CPU |
| 32 | Signal processor |
| 81 | Frequency converter |
| 82 | Digital signal processor |
| 101 | GNSS CPU |
| 102 | Synchronization acquisition unit |
| 103 | synchronization maintenance unit |
| 107 | 1PPS signal generator |

**Claims**

1. A mobile terminal comprising
   a positioning unit that, in a case where a number of satellites that can be captured is less than a predetermined number, does not perform positioning, and generates and outputs pulse signals at predetermined intervals synchronized with a time of the satellite that can be captured, on a basis of information from the satellite, and
   a wireless communication unit that maintains time synchronization of wireless communication with an external device with reference to the pulse signal, and performs the wireless communication.

2. The mobile terminal according to claim 1, wherein
   the positioning unit generates the pulse signal by performing calculation assuming that a most recently measured position is a position of the mobile terminal and a moving velocity is zero.

3. The mobile terminal according to claim 2, wherein
   the positioning unit calculates an internal time of the mobile terminal on a basis of a position of the satellite that can be captured and a time of the satellite, and calculates a frequency error of an internal oscillator of the mobile terminal on a basis of a velocity of the satellite that can be captured and a Doppler frequency of the satellite, to generate the pulse signal on a basis of the internal time and the frequency error.

4. The mobile terminal according to claim 1, wherein
   the predetermined number is four.

5. The mobile terminal according to claim 1, wherein
   the pulse signal is a 1PPS signal.

6. The mobile terminal according to claim 1, wherein
   the wireless communication unit transmits data according to a timing set with reference to the pulse signal.

**7.** The mobile terminal according to claim 1, wherein
the wireless communication unit sets a reception window at a timing corresponding to a timing at which the external device transmits data with reference to the pulse signal, and receives data transmitted by the external device during a period of the reception window.

**8.** The mobile terminal according to claim 7, wherein
the wireless communication unit sets the reception window with a time width equal to or greater than a sum of: an assumed maximum propagation delay time in a communication area of the external device, a time according to a packet length of a packet used for transmission of the data, and a time corresponding to an assumed error of an internal time of the mobile terminal.

**9.** The mobile terminal according to claim 8, wherein
the wireless communication unit sets the reception window with a time width equal to or greater than a time obtained by further adding a time corresponding to a reception synchronization error.

**10.** The mobile terminal according to claim 1, wherein
the positioning unit calculates a pseudo range and a Doppler frequency on a basis of information from the satellite that can be captured, and
the wireless communication unit transmits information of the pseudo range and the Doppler frequency.

**11.** The mobile terminal according to claim 1 further comprising a sensor including an acceleration sensor, wherein
the wireless communication unit transmits sensor data detected by the sensor.

**12.** The mobile terminal according to claim 3 further comprising a control unit that corrects an error of a transmission frequency with respect to a specified frequency in the wireless communication, on a basis of the frequency error.

**13.** An information processing method comprising the steps of:

in a case where a number of satellites that can be captured is less than a predetermined number, not performing positioning, and generating and outputting, from a positioning unit, pulse signals at predetermined intervals synchronized with a time of the satellite that can be captured, on a basis of information from the satellite; and maintaining time synchronization of wireless communication with an external device of a wireless communication unit with reference to the pulse signal, and performing the wireless communication.

**14.** A program that causes a computer to execute processing comprising the steps of:

in a case where a number of satellites that can be captured is less than a predetermined number, not performing positioning, and generating and outputting, from a positioning unit, pulse signals at predetermined intervals synchronized with a time of the satellite that can be captured, on a basis of information from the satellite; and maintaining time synchronization of wireless communication with an external device of a wireless communication unit with reference to the pulse signal, and performing the wireless communication.

**15.** An information processor comprising
a communication unit that receives information transmitted from a mobile terminal that, in a case where a number of satellites that can be captured is less than a predetermined number, does not perform positioning, generates and outputs, from a positioning unit, pulse signals at predetermined intervals synchronized with a time of the satellite that can be captured, on a basis of information from the satellite, and maintains time synchronization of wireless communication with an external device of a wireless communication unit with reference to the pulse signal, and an estimation unit that estimates a state of the mobile terminal on a basis of information received by the communication unit.

**16.** The information processor according to claim 15, wherein
the estimation unit estimates whether or not the mobile terminal is moving on a basis of a pseudo range and a Doppler frequency obtained by the mobile terminal on a basis of information from the satellite that can be captured, or on a basis of sensor data detected by the mobile terminal.

**17.** The information processor according to claim 15, wherein
the estimation unit estimates a position of the mobile terminal on a basis of transmission delay in a case where information transmitted by the mobile terminal is received by a plurality of the external devices.

18. An information processing method comprising the steps of:

receiving information transmitted from a mobile terminal that, in a case where a number of satellites that can be captured is less than a predetermined number, does not perform positioning, generates and outputs, from a positioning unit, pulse signals at predetermined intervals synchronized with a time of the satellite that can be captured, on a basis of information from the satellite, and maintains time synchronization of wireless communication with an external device of a wireless communication unit with reference to the pulse signal, and estimating a state of the mobile terminal on a basis of received information.

19. A program that causes a computer to execute processing comprising the steps of:

receiving information transmitted from a mobile terminal that, in a case where a number of satellites that can be captured is less than a predetermined number, does not perform positioning, generates and outputs, from a positioning unit, pulse signals at predetermined intervals synchronized with a time of the satellite that can be captured, on a basis of information from the satellite, and maintains time synchronization of wireless communication with an external device of a wireless communication unit with reference to the pulse signal, and estimating a state of the mobile terminal on a basis of received information.

## FIG. 1

FIG. 2

*FIG. 3*

EP 3 648 517 A1

## FIG. 4

EP 3 648 517 A1

## FIG. 5

1PPS

1sec (PRECISION OF SEVERAL TENS OF NANOSECONDS UNDER FAVORABLE CONDITION)

1sec (PRECISION OF ATOMIC CLOCK)

h HOUR m MINUTE s SECOND

h HOUR m MINUTE s+1 SECOND

GNSS TIME

EP 3 648 517 A1

FIG. 6

# FIG. 7

1PPS SIGNAL
(ABSOLUTE ERROR:
±SEVERAL TENS OF
NANOSECONDS)

TRANSMIT AT TIMING SET
WITH REFERENCE TO 1PPS

RECEIVE ONLY DURING
RECEPTION WINDOW PERIOD

PRECISE FREQUENCY
(WITHIN ±0.03ppm)

SPECIFIED
VALUE          TRANSMISSION          RECEPTION

1

ONE
SECOND

TRANSMISSION
FREQUENCY

TIME

PROPAGATION
DELAY

RECEPTION          TRANSMISSION

2

RECEPTION
FREQUENCY

t1          t2          t3          t4          t5          TIME

t11          t12

: RECEPTION WINDOW

EP 3 648 517 A1

## FIG. 8

MOBILE TERMINAL — 1

**12** GNSS RECEIVER

12A

1575. 42MHz
(GPS)

1PPS SIGNAL

**13** WIRELESS TRANSCEIVER

13A

920MHz BAND
(LPWA)

TERMINAL POSITION/
VELOCITY/TIME/
SATELLITE INFORMATION etc.

CONTROL SIGNAL

TIMING/
FREQUENCY
INFORMATION

CONTROL SIGNAL

TRANSMISSION/
RECEPTION DATA

SENSOR

CONTROL CPU

TIMING SETTING UNIT

I/O

14

11

11A

... 

**21** TCXO (e.g., 26MHz)

**22** XO (e.g., 32.768KHz)

**23** RTC

**24** TIMER

**25** MEMORY (RAM/ROM)

15 — SHARED UNIT

# FIG. 9

EP 3 648 517 A1

# FIG. 10

EP 3 648 517 A1

# FIG. 11

```
        ┌─────────────────────────────┐
        │   START GNSS RECEPTION       │
        │        PROCESSING            │
        └─────────────────────────────┘
                      │
                      ▼
        ┌─────────────────────────────┐ S1
        │   PERFORM INITIAL SETTING    │
        └─────────────────────────────┘
                      │
                      ▼
        ┌─────────────────────────────┐ S2
        │    START INITIAL OPERATION   │
        └─────────────────────────────┘
                      │
                      ▼
        ┌─────────────────────────────┐ S3
        │   ACQUIRE SYNCHRONIZATION OF │
        │  C/A CODE IN BASEBAND SIGNAL │
        └─────────────────────────────┘
                      │
                      ▼
        ┌─────────────────────────────┐ S4
        │ PERFORM SETTING FOR SYNCHRONIZATION │
        │ MAINTENANCE AND START OPERATION │
        └─────────────────────────────┘
```

ACQUIRE SATELLITE INFORMATION — S5

S6 — FOUR SATELLITES OR MORE? — NO → S11 — ONE SATELLITE OR MORE? — NO

YES

S7 — PERFORM NORMAL POSITIONING CALCULATION (INCLUDING CALCULATION OF Tu AND dfu)

YES

S12 — CALCULATE Tu AND dfu USING MOST RECENTLY MEASURED POSITION AND ZERO VELOCITY

S8 — OUTPUT INFORMATION SUCH AS POSITION, VELOCITY, AND TIME INFORMATION

S9 — OUTPUT 1PPS SIGNAL

S10 — CONTINUE?

YES

NO

END

# FIG. 12

```
    ┌─────────────────────────────────┐
    │  START TRANSMISSION PROCESSING   │
    │        OF MOBILE TERMINAL        │
    └─────────────────────────────────┘
                    │
     ┌──────────────┤
     │              ▼
     │   ┌──────────────────────────┐
     │   │ UPDATE TRANSMISSION TIMING│ S21
     │   │  ON BASIS OF 1PPS SIGNAL  │
     │   └──────────────────────────┘
     │              │
     │              ▼
     │   ┌──────────────────────────┐
     │   │      TRANSMIT DATA        │ S22
     │   └──────────────────────────┘
     │              │
     │              ▼
     │            S23
     │   YES   ◇─────────◇
     └───────◇ CONTINUE? ◇
             ◇───────────◇
                   │ NO
                   ▼
              ┌────────┐
              │  END   │
              └────────┘
```

FIG. 13

# FIG. 14

1PPS SIGNAL
( ABSOLUTE ERROR: )
( ±SEVERAL TENS OF )
( NANOSECONDS )

SPECIFIED
VALUE    TRANSMISSION   RECEPTION

ONE
SECOND

TIME

PROPAGATION
DELAY

RECEPTION   TRANSMISSION

TIME

t1        t2        t3        t4        t5

t11       t12

: RECEPTION WINDOW

EP 3 648 517 A1

# FIG. 15

A

RECEPTION WINDOW

0. 5u $\quad$ 0. 5u+1u+2u+10u+ MAXIMUM PACKET LENGTH

TRANSMISSION TIMING

B

RECEPTION WINDOW

0. 5u $\quad$ 0. 5u+1u+2u+10u+ HEADER LENGTH

TRANSMISSION TIMING

# FIG. 16

S4  S3  S2  S1

OBSTACLE

CAPABLE OF
RECEIVING FROM ONLY
TWO SATELLITES

1

WIRELESS

#1

· PSEUDO RANGE OF S1, 2
· DOPPLER FREQUENCY OF S1, 2

2

WIRELESS or WIRED

· WHETHER OR NOT
TERMINAL IS STOPPED

#2

SERVER
DEVICE

3

EP 3 648 517 A1

## FIG. 17

EP 3 648 517 A1

# FIG. 18

START GNSS RECEPTION PROCESSING

PERFORM INITIAL SETTING S31

START INITIAL OPERATION S32

ACQUIRE SYNCHRONIZATION OF C/A CODE IN BASEBAND SIGNAL S33

PERFORM SETTING FOR SYNCHRONIZATION MAINTENANCE AND START OPERATION S34

ACQUIRE SATELLITE INFORMATION S35

S36 FOUR SATELLITES OR MORE? — NO

YES

PERFORM NORMAL POSITIONING CALCULATION (INCLUDING CALCULATION OF Tu AND dfu) S37

OUTPUT INFORMATION SUCH AS POSITION, VELOCITY, AND TIME INFORMATION S38

S41 ONE SATELLITE OR MORE? — NO

YES

CALCULATE Tu AND dfu USING MOST RECENTLY MEASURED POSITION AND ZERO VELOCITY S42

OBTAIN PSEUDO RANGE AND DOPPLER FREQUENCY S43

OUTPUT PSEUDO RANGE AND DOPPLER FREQUENCY S44

OUTPUT 1PPS SIGNAL S39

S40 CONTINUE?

YES

NO

END

# FIG. 19

START BASE STATION
PROCESSING

RECEIVE PSEUDO RANGE AND DOPPLER FREQUENCY
TRANSMITTED FROM MOBILE TERMINAL — S51

CHECK FLUCTUATION OF PSEUDO RANGE
AND DOPPLER FREQUENCY — S52

TRANSMIT INFORMATION INDICATING
STOPPED/NOT STOPPED TO SERVER DEVICE — S53

END

## FIG. 20

EP 3 648 517 A1

## FIG. 21

# FIG. 22

START SERVER DEVICE
PROCESSING

RECEIVE INFORMATION ON TRANSMISSION DELAY
BETWEEN BASE STATION AND MOBILE TERMINAL
TRANSMITTED FROM EACH BASE STATION | S61

ESTIMATE POSITION OF MOBILE TERMINAL ON
BASIS OF TRANSMISSION DELAY INFORMATION
TRANSMITTED FROM THREE OR MORE BASE STATIONS | S62

MANAGE AS POSITION OF MOBILE TERMINAL | S63

END

FIG. 23

S4

S3

S2

S1

OBSTACLE

CAPABLE OF
RECEIVING FROM ONLY
TWO SATELLITES

1

WIRELESS

·ACCELERATION, VELOCITY, and/or
(WHETHER OR NOT TERMINAL IS
STOPPED)

#11

WIRELESS or WIRED

·WHETHER OR NOT
TERMINAL IS STOPPED

2

#12

3

SERVER
DEVICE

# FIG. 24

```
┌─────────────────────────────────────────┐
│  START FREQUENCY ERROR CORRECTION        │
│     PROCESSING BY MOBILE TERMINAL        │
└─────────────────────────────────────────┘
                     │
                     ▼
┌─────────────────────────────────────────┐ S71
│  GENERATE 1PPS SIGNAL BY PERFORMING      │
│      GNSS RECEPTION PROCESSING           │
└─────────────────────────────────────────┘
                     │
                     ▼
┌─────────────────────────────────────────┐ S72
│     ADJUST FREQUENCY DIVISION RATIO      │
│      OF Fructional−N PLL ON BASIS OF     │
│      OSCILLATOR FREQUENCY ERROR          │
└─────────────────────────────────────────┘
                     │
                     ▼
┌─────────────────────────────────────────┐ S73
│     TRANSMIT DATA USING CORRECTED        │
│       TRANSMISSION FREQUENCY             │
└─────────────────────────────────────────┘
                     │
                     ▼
               ┌──────────┐
               │   END    │
               └──────────┘
```

## INTERNATIONAL SEARCH REPORT

| International application No. |
| --- |
| PCT/JP2018/022834 |

### A. CLASSIFICATION OF SUBJECT MATTER

Int.Cl. H04W56/00(2009.01)i, G01S19/16(2010.01)i, G04G3/02(2006.01)i,
G04G7/00(2006.01)i, G04G21/00(2010.01)i, G04R40/06(2013.01)i,
H04L7/00(2006.01)i, H04W64/00(2009.01)i

According to International Patent Classification (IPC) or to both national classification and IPC

### B. FIELDS SEARCHED

Minimum documentation searched (classification system followed by classification symbols)
Int.Cl. H04W4/00-99/00, H04B7/24-7/26, G01S19/16, G04G3/02, G04G7/00,
G04G21/00, G04R40/06, H04L7/00

Documentation searched other than minimum documentation to the extent that such documents are included in the fields searched

| | |
| --- | --- |
| Published examined utility model applications of Japan | 1922–1996 |
| Published unexamined utility model applications of Japan | 1971–2018 |
| Registered utility model specifications of Japan | 1996–2018 |
| Published registered utility model applications of Japan | 1994–2018 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| Y | JP 2013-50396 A (SEIKO EPSON CORPORATION) 14 March 2013, paragraphs [0036]-[0042] | 1, 2, 4-7, 10, 11, 13-19 |
| A | (Family: none) | 3, 8, 9, 12 |
| Y | JP 9-236652 A (NIPPON ELECTRIC ENG) 09 September 1997, paragraphs [0006]-[0009] | 1, 2, 4-7, 10, 11, 13-19 |
| A | (Family: none) | 3, 8, 9, 12 |

☒ Further documents are listed in the continuation of Box C.  ☐ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 28.08.2018 | 04.09.2018 |

| Name and mailing address of the ISA/ | Authorized officer |
| --- | --- |
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

| International application No. |
|---|
| PCT/JP2018/022834 |

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 2017-60042 A (DENSO CORPORATION) 23 March 2017, paragraphs [0005]-[0008] <br> & WO 2017/047325 A1, paragraphs [0005]-[0008] | 1, 2, 4-7, 10, 11, 13-19 |
| Y | JP 2006-337260 A (MAZERAN SYSTEMS JAPAN KK) 14 December 2006, claim 1 <br> (Family: none) | 10, 16, 17 |

Form PCT/ISA/210 (continuation of second sheet) (January 2015)

**EP 3 648 517 A1**

**Patent documents cited in the description**

- JP 2015023337 A